(19)

Europäisches Patentamt
European Patent Office
Office européen des brevets

(11) **EP 4 530 715 A1**

(12) **EUROPEAN PATENT APPLICATION**

(43) Date of publication:
**02.04.2025 Bulletin 2025/14**

(21) Application number: **24177959.4**

(22) Date of filing: **24.05.2024**

(51) International Patent Classification (IPC):
**G03B 9/06** (2021.01)

(52) Cooperative Patent Classification (CPC):
**G03B 9/06**; G03B 30/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 US 202363541241 P**

(71) Applicant: **Largan Precision Co. Ltd.
Taichung City, R.O.C. (TW)**

(72) Inventors:
• **HONG, ZHENG-ZHI
Taichung City, R.O.C. (TW)**

• **HSIAO, HSIU-YI
Taichung City, R.O.C. (TW)**
• **CHEN, HAO JAN
Taichung City, R.O.C. (TW)**
• **CHOU, MING-TA
Taichung City, R.O.C. (TW)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(54) **ADJUSTABLE APERTURE ASSEMBLY, OPTICAL LENS MODULE, CAMERA MODULE AND ELECTRONIC DEVICE**

(57)     An optical lens module (9) includes an adjustable aperture assembly (1) including rotatable blades (11), a driving part (12) and an attractive force mechanism. The rotatable blades (11) surround an optical axis (OA) of a lens element and form a light pass aperture (110). The driving part (12) includes a rotatable component (121), a fixed component (120), a driving magnet (124) and a coil. The rotatable component (121) rotates the rotatable blades (11) for adjusting an aperture size of the light pass aperture (110). The driving magnet (124) is disposed on the rotatable component (121). The coil corresponds to the driving magnet (124) to rotate the rotatable component (121). The attractive force mechanism provides an attractive force (AF) between the rotatable component (121) and the fixed component (120) and provides a driving force exerted on the rotatable blades (11) for maintaining the light pass aperture (110) in an enlarged state. The attractive force (AF) includes a magnetic force exerted by the rotatable component (121) on a first magnetic element (14) fixed on the fixed component (120).

FIG. 2

## Description

## BACKGROUND

Technical Field

The present disclosure relates to an adjustable aperture assembly, an optical lens module, a camera module and an electronic device, more particularly to an adjustable aperture assembly, an optical lens module and a camera module applicable to an electronic device.

Description of Related Art

With the development of semiconductor manufacturing technology, the performance of image sensors has been improved, and the pixel size thereof has been scaled down. Therefore, featuring high image quality becomes one of the indispensable features of an optical system nowadays. Furthermore, due to the rapid changes in technology, electronic devices equipped with optical systems are trending towards multi-functionality for various applications, and therefore the functionality requirements for the optical systems have been increasing.

In recent years, compact camera modules have been applied in various fields, such as portable devices (e.g., smartphones, action cameras), augmented reality and virtual reality head-mounted devices or aerial cameras. Moreover, the hardwares of the compact camera modules have been continuously upgraded, such as larger image sensors and imaging lenses with higher image quality. Using larger image sensors can provide users with better image quality but may result in background blurring. A conventional adjustable aperture module can be used to adjust the degree of background blurring and control the amount of light entering the imaging lens. However, when mechanical failures occur in the light-blocking blades of the conventional adjustable aperture module, the aperture functions of the optical systems may interfere with each other, rendering the original functions of the optical systems inoperative.

## SUMMARY

According to one aspect of the present disclosure, an optical lens module includes at least one lens element and an adjustable aperture assembly, and the adjustable aperture assembly is disposed corresponding to the lens element. The adjustable aperture assembly preferably includes a plurality of rotatable blades, a driving part, and an attractive force mechanism. The rotatable blades are rotatably arranged around an optical axis of the lens element and collectively form a light pass aperture, and the optical axis passes through the light pass aperture. The driving part includes a rotatable component, a fixed component, at least one driving magnet, and at least one coil. The rotatable component is disposed corresponding to the rotatable blades, and the rotatable component is configured to drive the rotatable blades to rotate for adjusting an aperture size of the light pass aperture. The fixed component is disposed corresponding to the rotatable component, and the rotatable component has a rotational degree of freedom along a circumferential direction around and perpendicular to the optical axis relative to the fixed component. The driving magnet is disposed on the rotatable component, and the coil is disposed corresponding to the driving magnet for driving the rotatable component to rotate. Preferably, the attractive force mechanism provides an attractive force exerted between the rotatable component and the fixed component, and the attractive force includes a magnetic force exerted by the rotatable component on a first magnetic element fixed on the fixed component. Preferably, the attractive force mechanism provides a driving force exerted on the rotatable blades for maintaining the light pass aperture in an enlarged state.

According to another aspect of the present disclosure, an optical lens module includes at least one lens element and an adjustable aperture assembly, and the adjustable aperture assembly is disposed corresponding to the lens element. The adjustable aperture assembly preferably includes a plurality of rotatable blades, a driving part, and a preload force mechanism. The rotatable blades are rotatably arranged around an optical axis of the lens element and collectively form a light pass aperture, and the optical axis passes through the light pass aperture. The driving part includes a rotatable component, a fixed component, at least one driving magnet, and at least one coil. The rotatable component is disposed corresponding to the rotatable blades, and the rotatable component is configured to drive the rotatable blades to rotate for adjusting an aperture size of the light pass aperture. The fixed component is disposed corresponding to the rotatable component, and the rotatable component has a rotational degree of freedom along a circumferential direction around and perpendicular to the optical axis relative to the fixed component. The driving magnet is disposed on the rotatable component, and the coil is disposed corresponding to the driving magnet for driving the rotatable component to rotate. Preferably, the preload force mechanism provides an attractive force exerted between the rotatable component and the fixed component, and the attractive force includes a magnetic force exerted by the rotatable component on a stator magnet fixed on the fixed component. Preferably, the preload force mechanism provides a driving force exerted on the rotatable blades for maintaining the light pass aperture in an enlarged state.

According to another aspect of the present disclosure, an optical lens module includes at least one lens element and an adjustable aperture assembly, and the adjustable aperture assembly is disposed corresponding to the lens element. The adjustable aperture assembly preferably includes a plurality of rotatable blades, a driving part, and a preload force mechanism. The rotatable blades are rotatably arranged around an optical axis of the lens element and collectively form a light pass aperture, and the optical axis passes through the light pass aperture. The driving part includes a rotatable component, a fixed component, at least one driving magnet, and at least one coil. The rotatable component is disposed corresponding to the rotatable blades, and the rotatable component is configured to drive the rotatable blades to rotate for adjusting an aperture size of the light pass aperture. The fixed component is disposed corresponding to the rotatable component, and the rotatable component has a rotational degree of freedom along a circumferential direction around and perpendicular to the optical axis relative to the fixed component. The driving magnet is disposed on the rotatable component, and the coil is disposed corresponding to the driving magnet for driving the rotatable component to rotate. Preferably, the preload force mechanism provides a repulsive force exerted between the rotatable component and the fixed component, and the repulsive force includes a magnetic force exerted by the rotatable component on a stator magnet disposed on the fixed component. Preferably, the preload force mechanism provides a driving force exerted on the rotatable blades for maintaining the light pass aperture in an enlarged state.

According to another aspect of the present disclosure, a camera module includes one of the aforementioned optical lens modules and an image sensor. The image sensor is disposed on an image surface of the optical lens module.

According to another aspect of the present disclosure, an electronic device includes the aforementioned camera module.

**BRIEF DESCRIPTION OF THE DRAWINGS**

The disclosure can be better understood by reading the following detailed description of the embodiments, with reference made to the accompanying drawings as follows:

Fig. 1 is a perspective view of an adjustable aperture assembly of an optical lens module according to the 1st embodiment of the present disclosure;
Fig. 2 is an exploded view of the adjustable aperture assembly in Fig. 1;
Fig. 3 is a schematic view for showing the relative positions of first magnetic elements and second magnetic elements embedded within a fixed component in Fig. 2;
Fig. 4 is a partially exploded view of the adjustable aperture assembly in Fig. 1 without an upper cover;
Fig. 5 is a schematic view illustrating the operation of an attractive force mechanism of the adjustable aperture assembly in Fig. 1;
Fig. 6 is a schematic view illustrating the arrangement of a driving part of the adjustable aperture assembly in Fig. 1;
Fig. 7 is a cross-sectional view of the optical lens module according to the 1st embodiment of the present disclosure;
Fig. 8 and Fig. 9 are perspective views respectively illustrating one first magnetic element and another first magnetic element in Fig. 3;
Fig. 10 is a front view of the first magnetic element in Fig. 9;
Fig. 11 to Fig. 13 are perspective views respectively illustrating one first magnetic element and another first magnetic element and a front view of one of the first magnetic elements according to another configuration of the present disclosure;
Fig. 14 to Fig. 16 are perspective views respectively illustrating one first magnetic element and another first magnetic element and a front view of one of the first magnetic elements according to another configuration of the present disclosure;
Fig. 17 to Fig. 19 are perspective views respectively illustrating one first magnetic element and another first magnetic element and a front view of one of the first magnetic elements according to another configuration of the present disclosure;
Fig. 20 to Fig. 22 are perspective views respectively illustrating one first magnetic element and another first magnetic element and a front view of one of the first magnetic elements according to another configuration of the present disclosure;
Fig. 23 to Fig. 25 are perspective views respectively illustrating one first magnetic element and another first magnetic element and a front view of one of the first magnetic elements according to another configuration of the present disclosure;
Fig. 26 is a schematic view illustrating the arrangement of a driving part of an adjustable aperture assembly according to another configuration of the present disclosure;
Fig. 27 is a cross-sectional view of an optical lens module according to another configuration of the 1st embodiment of the present disclosure;
Fig. 28 is a schematic view illustrating the arrangement and operation of an attractive force mechanism of an adjustable aperture assembly according to another configuration of the present disclosure;
Fig. 29 is a perspective view of an adjustable aperture assembly of an optical lens module according to the 2nd embodiment of the present disclosure;
Fig. 30 is an exploded view of the adjustable aperture assembly in Fig. 29;
Fig. 31 is a partially exploded view of the adjustable aperture assembly in Fig. 29 without an upper cover;
Fig. 32 is a schematic view illustrating the operation of a preload force mechanism of the adjustable aperture assembly in Fig. 29;
Fig. 33 is a partially exploded view of an adjustable aperture assembly without an upper cover according to another configuration of the 2nd embodiment of the present disclosure;

Fig. 34 is a schematic view illustrating the operation of a preload force mechanism of the adjustable aperture assembly in Fig. 33;

Fig. 35 is a partially exploded view of an adjustable aperture assembly without an upper cover according to another configuration of the present disclosure;

Fig. 36 is a schematic view illustrating the operation of a preload force mechanism of the adjustable aperture assembly in Fig. 35;

Fig. 37 is a partially exploded view of an adjustable aperture assembly without an upper cover according to another configuration of the present disclosure;

Fig. 38 is a schematic view illustrating the operation of a preload force mechanism of the adjustable aperture assembly in Fig. 37;

Fig. 39 is a partially exploded view of an adjustable aperture assembly without an upper cover according to another configuration of the present disclosure;

Fig. 40 is a schematic view illustrating the operation of a preload force mechanism of the adjustable aperture assembly in Fig. 39;

Fig. 41 is a schematic view illustrating the arrangement and operation of a preload force mechanism of an adjustable aperture assembly according to another configuration of the present disclosure;

Fig. 42 is a schematic view illustrating the arrangement and operation of an attractive force mechanism and a preload force mechanism of an adjustable aperture assembly according to another configuration of the present disclosure;

Fig. 43 is a perspective view of an adjustable aperture assembly of an optical lens module according to the 3rd embodiment of the present disclosure;

Fig. 44 is an exploded view of the adjustable aperture assembly in Fig. 43;

Fig. 45 is a schematic view for showing the relative positions of first magnetic elements embedded within a fixed component in Fig. 44;

Fig. 46 is a partially exploded view of the adjustable aperture assembly in Fig. 43 without an upper cover;

Fig. 47 is a schematic view illustrating the operation of a preload force mechanism of the adjustable aperture assembly in Fig. 43;

Fig. 48 is a perspective view of an adjustable aperture assembly of an optical lens module according to the 4th embodiment of the present disclosure;

Fig. 49 is an exploded view of the adjustable aperture assembly in Fig. 48;

Fig. 50 is a schematic view for showing the relative positions of second magnetic elements embedded within a fixed component in Fig. 49;

Fig. 51 is a partially exploded view of the adjustable aperture assembly in Fig. 48;

Fig. 52 is a schematic view illustrating the operation of an attractive force mechanism of the adjustable aperture assembly in Fig. 48;

Fig. 53 is a perspective view of an adjustable aperture assembly of an optical lens module according to the 5th embodiment of the present disclosure;

Fig. 54 is an exploded view of the adjustable aperture assembly in Fig. 53;

Fig. 55 is a schematic view for showing the relative positions of second magnetic elements embedded within a fixed component in Fig. 54;

Fig. 56 is a partially exploded view of the adjustable aperture assembly in Fig. 53;

Fig. 57 is a schematic view illustrating the operation of an attractive force mechanism of the adjustable aperture assembly in Fig. 53;

Fig. 58 is one perspective view of an electronic device according to the 6th embodiment of the present disclosure;

Fig. 59 is another perspective view of the electronic device in Fig. 58;

Fig. 60 is an illustration of an image captured by an ultra-wide-angle camera module;

Fig. 61 is an illustration of an image captured by a high pixel camera module;

Fig. 62 is an illustration of an image captured by a telephoto camera module;

Fig. 63 is a perspective view of an electronic device according to the 7th embodiment of the present disclosure;

Fig. 64 is a perspective view of an electronic device according to the 8th embodiment of the present disclosure;

Fig. 65 is a side view of the electronic device in Fig. 64; and

Fig. 66 is a top view of the electronic device in Fig. 64.

## DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

The present disclosure provides an optical lens module. The optical lens module includes at least one lens element and an adjustable aperture assembly, and the adjustable aperture assembly is disposed corresponding to the at least one lens element. Moreover, the number of lens elements in the optical lens module can be one or multiple, and the present disclosure is not limited thereto. Moreover, the adjustable aperture assembly can be disposed at an object side of the lens element(s) or between the lens element(s), and the present disclosure is not limited thereto.

The adjustable aperture assembly includes a plurality of rotatable blades and a driving part. The rotatable blades are rotatably arranged around an optical axis of the lens element(s) and collectively form a light pass aperture, and the optical axis passes through the light pass aperture. The driving part includes a rotatable component, a fixed component, at least one driving magnet and at least one coil.

The rotatable component is disposed corresponding to the rotatable blades, and the rotatable component is configured to drive the rotatable blades to rotate for adjusting an aperture size of the light pass aperture.

The fixed component is disposed corresponding to the rotatable component, and the rotatable component has a rotational degree of freedom along a circumferential direction around and perpendicular to the optical axis relative to the fixed component. Moreover, the rotatable component can be considered as a rotor, the fixed component can be considered as a stator, and the rotatable component is capable of rotating relative to the fixed component.

The driving magnet is disposed on the rotatable component, and the coil is disposed corresponding to the driving magnet for driving the rotatable component to rotate. Moreover, the coil is disposed on the fixed component, the driving magnet is capable of rotating with the rotatable component, and the coil remains stationary. Moreover, the number of driving magnets and the number of coils can be the same, and each can be one or multiple, and the present disclosure is not limited thereto.

In one exemplary configuration, the adjustable aperture assembly can further include an attractive force mechanism. The attractive force mechanism can provide an attractive force exerted between the rotatable component and the fixed component, and the attractive force can include a magnetic force exerted by the rotatable component on a first magnetic element that is fixed to the fixed component. Moreover, the attractive force mechanism can provide a driving force exerted on the rotatable blades for maintaining the light pass aperture in an enlarged state. Moreover, the first magnetic element can be fixed to the fixed component, for example, through processes such as assembly, insert molding, or dispensing, and the present disclosure is not limited thereto. In the present disclosure, the magnetic element is, for example, made of magnetic material, and the magnetic element can interact with a magnet to generate a mutually attractive magnetic force between them, but the present disclosure is not limited thereto.

In another exemplary configuration, the adjustable aperture assembly can further include a preload force mechanism. The preload force mechanism can provide an attractive force exerted between the rotatable component and the fixed component, and the attractive force can include a magnetic force exerted by the rotatable component on a stator magnet that is disposed on the fixed component. Moreover, the preload force mechanism can provide a driving force exerted on the rotatable blades for maintaining the light pass aperture in an enlarged state. Moreover, the stator magnet can be fixed to the fixed component, and the stator magnet can be fixed to the fixed component, for example, through processes such as assembly or dispensing, but the present disclosure is not limited thereto.

In another exemplary configuration, the adjustable aperture assembly can further include a preload force mechanism. The preload force mechanism can provide a repulsive force exerted between the rotatable component and the fixed component, and the repulsive force can include a magnetic force exerted by the rotatable component on a stator magnet that is disposed on the fixed component. Moreover, the preload force mechanism can provide a driving force exerted on the rotatable blades for maintain the light pass aperture in an enlarged state. Moreover, the stator magnet can be fixed to the fixed component, and the stator magnet can be fixed to the fixed component, for example, through processes such as assembly or dispensing, but the present disclosure is not limited thereto.

According to the optical lens module of the present disclosure, by configuring an attractive force mechanism or a preload force mechanism in the adjustable aperture assembly, the optical lens module can maintain a normally open aperture state when not in use or not powered, ensuring that the aperture functions of the optical lens module do not interfere with each other. Consequently, even if a mechanical failure occurs in the rotatable blades, the basic shooting functionality of the optical lens module can still be ensured.

The driving part can further include at least two bearing elements arranged around the optical axis, and the at least two bearing elements are disposed between the rotatable component and the fixed component. In addition, the at least two bearing elements support the rotatable component, such that the rotatable component is rotatable relative to the fixed component along the circumferential direction. Therefore, it is favorable for aligning the bearing elements with the optical axis so as to enhance the rotational stability of the rotatable component. Moreover, each of the bearing elements can be, for example, a ball element, but the present disclosure is not limited thereto.

The adjustable aperture assembly can further include an upper cover fixed to the fixed component. There is an inner space formed between the upper cover and the fixed component, and the rotatable blades are disposed in the inner space. Moreover, the upper cover can be a plastic element or a magnetic element, but the present disclosure is not limited thereto.

In one exemplary configuration, the upper cover is the first magnetic element. Therefore, the upper cover is a magnetic element that can be fabricated using mold processing to meet the requirements for achieving the attractive force mechanism, allowing it to interact properly with the rotatable component. However, the present disclosure is not limited thereto. In another exemplary configuration, the upper cover and the first magnetic element can be different components, and the first magnetic element can include an extension part and a base part connected to each other. The extension part is arranged along a direction parallel to the optical axis, the base part is arranged along a direction perpendicular to the optical axis, and a junction between the base part and the extension part includes a bend.

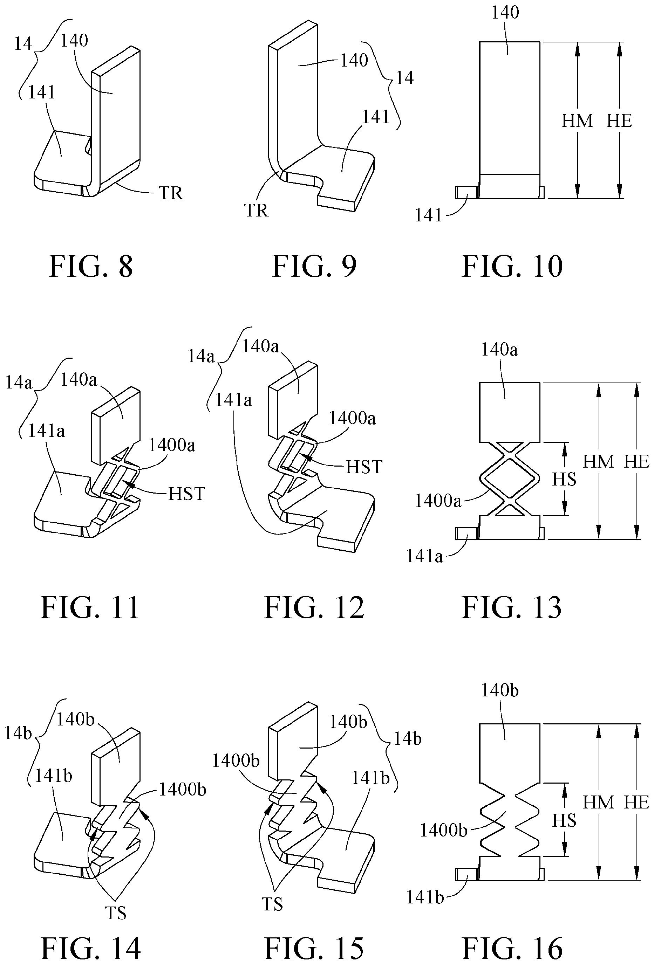

The extension part can include an elastic section. When a height of the extension part is HE, and a height of the elastic section is HS, the following condition can be satisfied: $0 \leq HS/HE \leq 1$. Therefore, under specific structural proportions, the production yield can be improved. The height of the extension part can refer to the length of the extension part in parallel with the optical axis. The height of the elastic section can refer to the length of the elastic section in parallel with the optical axis. Please refer to Fig. 13, which shows a schematic view of the height HE of the extension part and the height HS of the elastic section according to one exemplary configuration of the present disclosure.

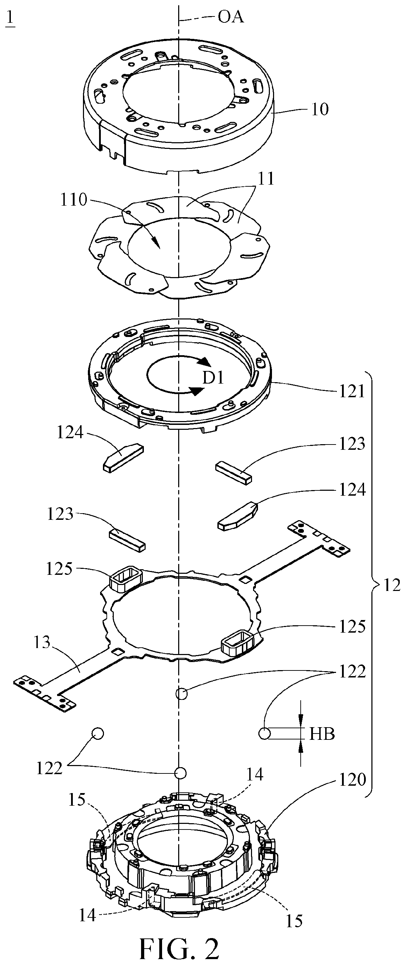

When a height of the first magnetic element is HM, and a height of each of the bearing elements is HB, the following condition can be satisfied: $0.1 \leq HB/HM \leq 1$. Therefore, under specific structural proportions, the production yield can be improved. The height of the first magnetic element can refer to the length of the first magnetic element in parallel with the optical axis. The height of each of the bearing elements can refer to the length of each of the bearing elements in parallel with the optical axis. Please refer to Fig. 2 and Fig. 10, which shows a schematic view of the height HM of the first magnetic element and the height HB of the bearing element according to the 1st embodiment of the present disclosure.

The first magnetic element can further include a buffer part disposed on the extension part. Therefore, a buffer can be provided when the rotor magnet or driving magnet approaches and then contacts the first magnetic element due to the attractive force so as to reduce impact and vibration, thereby ensuring the stability of the adjustable aperture assembly.

The adjustable aperture assembly can further include at least one second magnetic element disposed corresponding to the at least one driving magnet. Therefore, a preload force can be generated between the second magnetic element and the driving magnet to maintain the operation of the rotatable component relative to the fixed component, preventing the disassembly of the adjustable aperture assembly. Moreover, the preload force generated between the second magnetic element and the driving magnet can, for example, be provided by the magnetic attraction force resulting from the interaction between the second magnetic element and the driving magnet.

The first magnetic element and the second magnetic element can be formed of a single piece. Therefore, it is favorable for simplifying the assembly process and enhancing production efficiency.

In one exemplary configuration, the driving magnet can be disposed corresponding to the coil in the direction perpendicular to the optical axis. Therefore, the driving magnet and the coil can serve as a side driving mechanism for the rotatable component. However, the present disclosure is not limited thereto. In another exemplary configuration, the driving magnet can be disposed corresponding to the coil in the direction parallel to the optical axis. Therefore, the driving magnet and the coil can serve as a bottom driving mechanism for the rotatable component.

In one exemplary configuration, the magnetic force of the rotatable component can be exerted between the first magnetic element and the driving magnet. However, the present disclosure is not limited thereto. In another exemplary configuration, the magnetic force of the rotatable component can be exerted between the first magnetic element and a rotor magnet that is disposed on the rotatable component.

The adjustable aperture assembly can further include a printed circuit board (PCB), and the printed circuit board disposed corresponding to and electrically connected to the driving part. Moreover, the printed circuit board can be a flexible printed circuit (FPC), but the present disclosure is not limited thereto.

In one exemplary configuration, the magnetic force of the rotatable component can be exerted between the stator magnet and the driving magnet. However, the present disclosure is not limited thereto. In another exemplary configuration, the magnetic force of the rotatable component can be exerted between the stator magnet and the rotor magnet that is disposed on the rotatable component. In still another exemplary configuration, the magnetic force of the rotatable component can be exerted between the stator magnet and a third magnetic element that is fixed to the rotatable component. Moreover, the third magnetic element can be fixed to the rotatable component, for example, through processes such as assembly, insert molding, or dispensing, but the present disclosure is not limited thereto.

When a maximum field of view of the optical lens module is FOV, the following condition can be satisfied: 50 degrees $\leq$ FOV $\leq$ 105 degrees. Therefore, an appropriate maximum field of view can make the aperture size of the light pass aperture adjustable.

When an f-number of the optical lens module is FNO, the following condition can be satisfied: $0.9 \leq FNO \leq 5.6$. Therefore, changes in the aperture size can adapt the f-number of the optical lens module to different shooting environments. Moreover, commonly used f-number for the optical lens module in various shooting environments include, for example, 1.6, 2.8, 2.0, 2.4, 3.2, and 4.0, but the present disclosure is not limited thereto.

According to the present disclosure, a camera module is provided. The camera module includes the aforementioned optical lens module and an image sensor. The image sensor is disposed on an image surface of the optical lens module.

According to the present disclosure, an electronic device is provided. The electronic device includes the aforementioned camera module.

**EP 4 530 715 A1**

According to the present disclosure, the aforementioned features and conditions can be utilized in numerous combinations so as to achieve corresponding effects.

According to the above description of the present disclosure, the following specific embodiments are provided for further explanation.

**1st Embodiment**

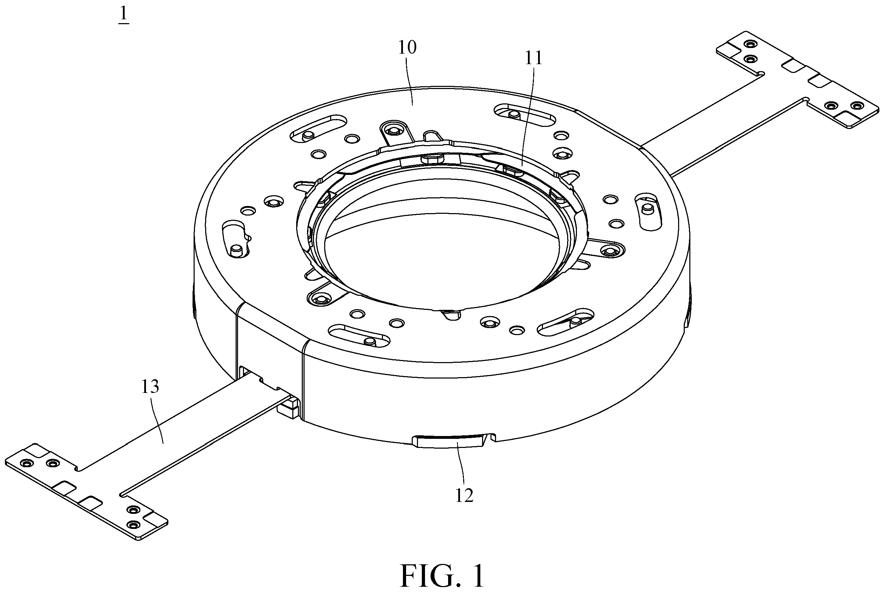

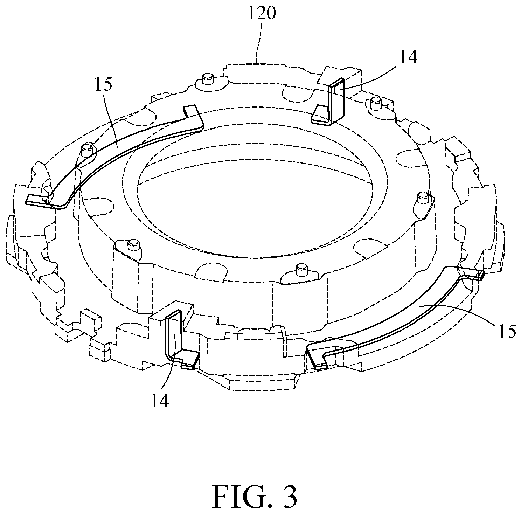

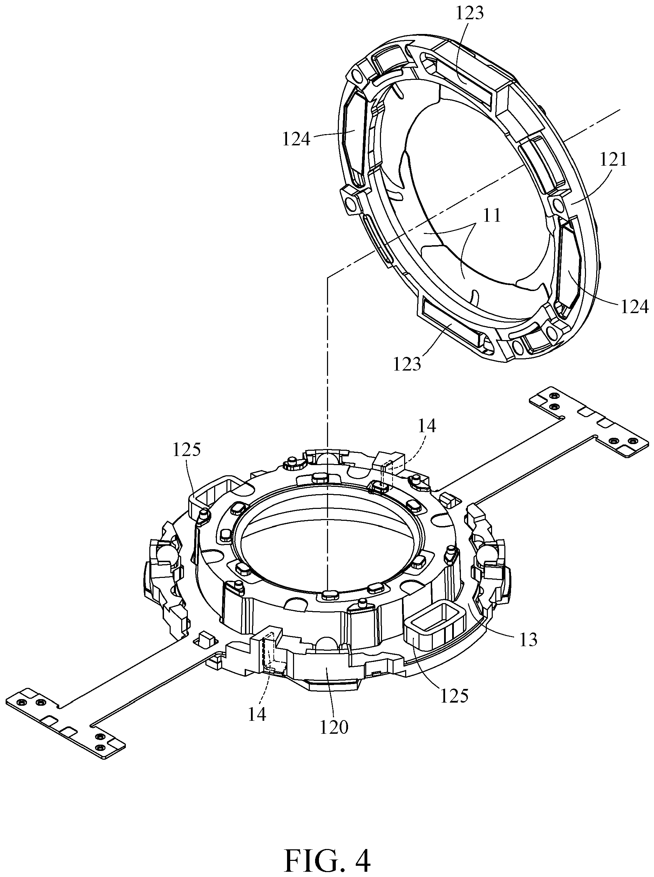

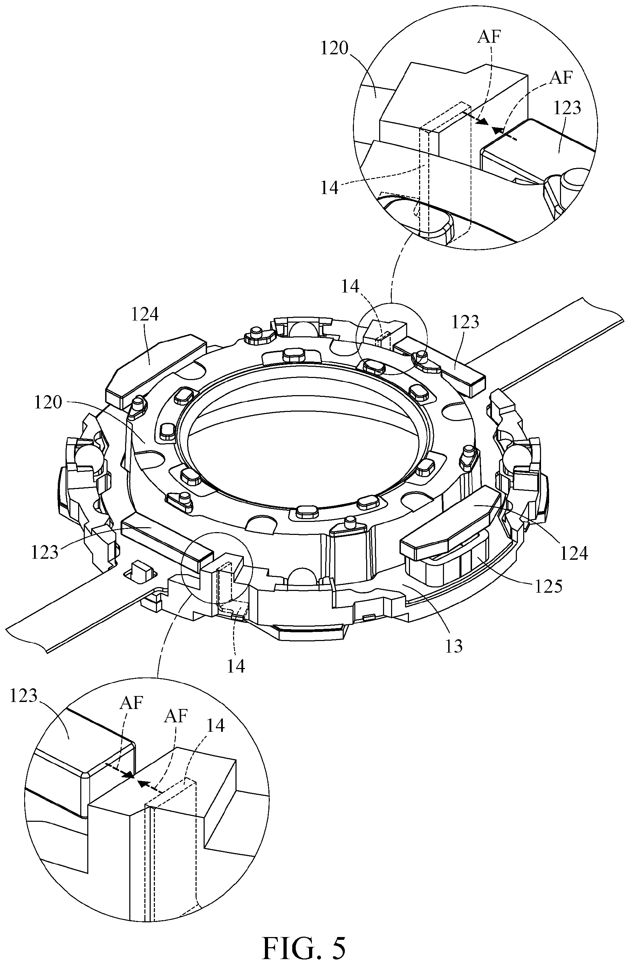

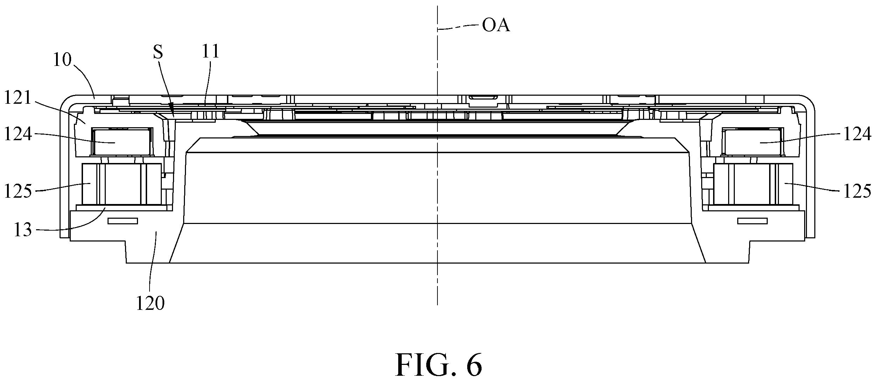

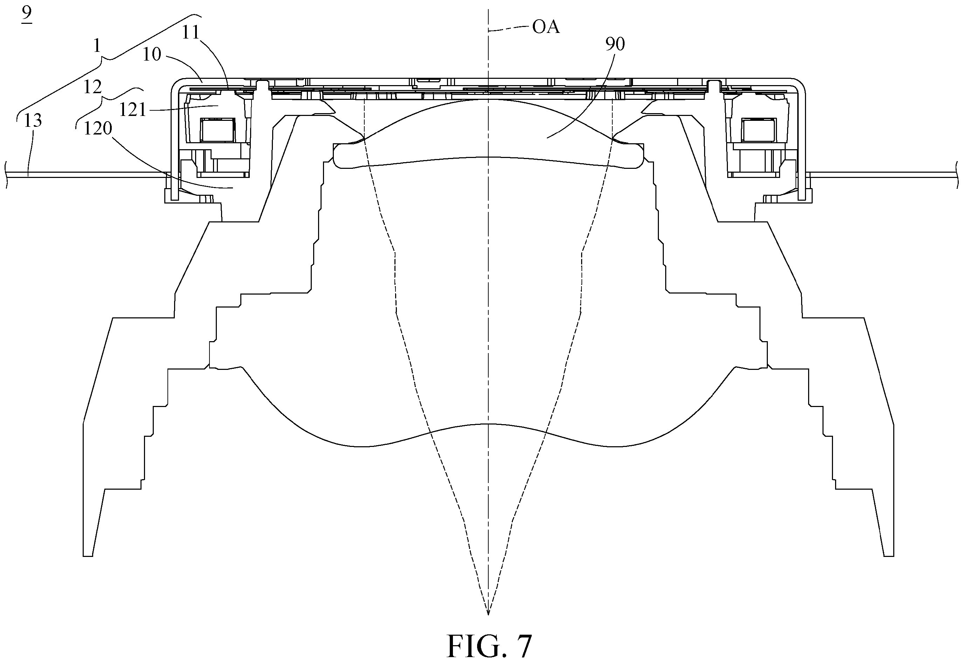

Fig. 1 is a perspective view of an adjustable aperture assembly of an optical lens module according to the 1st embodiment of the present disclosure, Fig. 2 is an exploded view of the adjustable aperture assembly in Fig. 1, Fig. 3 is a schematic view for showing the relative positions of first magnetic elements and second magnetic elements embedded within a fixed component in Fig. 2, Fig. 4 is a partially exploded view of the adjustable aperture assembly in Fig. 1 without an upper cover, Fig. 5 is a schematic view illustrating the operation of an attractive force mechanism of the adjustable aperture assembly in Fig. 1, Fig. 6 is a schematic view illustrating the arrangement of a driving part of the adjustable aperture assembly in Fig. 1, Fig. 7 is a cross-sectional view of the optical lens module according to the 1st embodiment of the present disclosure, Fig. 8 and Fig. 9 are perspective views respectively illustrating one first magnetic element and another first magnetic element in Fig. 3, and Fig. 10 is a front view of the first magnetic element in Fig. 9.

The optical lens module 9 includes at least one lens element 90 and an adjustable aperture assembly 1 (as shown in Fig. 7), and the adjustable aperture assembly 1 is disposed corresponding to the lens element 90.

The adjustable aperture assembly 1 includes an upper cover 10, a plurality of rotatable blades 11, a driving part 12, a printed circuit board 13, two first magnetic elements 14, two second magnetic elements 15 and an attractive force mechanism. Moreover, the rotatable blades 11 are rotatably arranged around an optical axis OA of the lens element 90 and collectively form a light pass aperture 110, and the optical axis OA passes through the light pass aperture 110.

The upper cover 10 is disposed on the driving part 12, the upper cover 10 and the driving part 12 collectively form an inner space S therebetween, and the rotatable blades 11 are disposed in the inner space S. In addition, the printed circuit board 13 is disposed corresponding to and electrically connected to the driving part 12. Specifically, the driving part 12 includes a fixed component 120, a rotatable component 121, four bearing elements 122, two rotor magnets 123, two driving magnets 124, and two coils 125. Moreover, the upper cover 10 is fixed to the fixed component 120, and the inner space S is formed between the upper cover 10 and the fixed component 120 for the rotatable blades 11 to be disposed therein. Furthermore, the printed circuit board 13 is attached to the fixed component 120.

The fixed component 120 and the rotatable component 121 are disposed corresponding to each other, and the rotatable component 121 has a rotational degree of freedom along a circumferential direction D1 around and perpendicular to the optical axis OA relative to the fixed component 120. Furthermore, the rotatable component 121 is disposed corresponding to the rotatable blades 11, and the rotatable component 121 is configured to drive the rotatable blades 11 to rotate for adjusting an aperture size of the light pass aperture 110. It should be understood that the upper cover 10, the rotatable component 121, and the fixed component 120 all have openings disposed corresponding to the light pass aperture 110 of the rotatable blades 11, allowing light to travel through these openings and the light pass aperture 110.

The bearing elements 122 are disposed between the rotatable component 121 and the fixed component 120 and arranged around the optical axis OA, and the bearing elements 122 support the rotatable component 121, allowing the rotatable component 121 to rotate relative to the fixed component 120 along the circumferential direction D1.

The two rotor magnets 123 are disposed on the rotatable component 121, and the two rotor magnets 123 are located on opposite sides of the rotatable component 121. The two driving magnets 124 are disposed on the rotatable component 121, and the two driving magnets 124 are located on opposite sides of the rotatable component 121. In this embodiment, the two rotor magnets 123 and the two driving magnets 124 are alternatively arranged along the circumferential direction D1 that is perpendicular and surrounds the optical axis OA.

The two coils 125 are disposed on and electrically connected to the printed circuit board 13, and the two coils 125 are disposed corresponding to the two driving magnets 124, respectively, for driving the rotatable component 121 to rotate, thereby driving the rotation of the rotatable blades 11 for adjusting the aperture size of the light pass aperture 110.

As shown in Fig. 2, Fig. 3, and Fig. 8 to Fig. 10, the two first magnetic elements 14 are fixed to the fixed component 120. Each of the first magnetic elements 14 includes an extension part 140 and a base part 141 that are connected to each other. The extension part 140 is arranged in the direction parallel to the optical axis OA, while the base part 141 is arranged in the direction perpendicular to the optical axis OA. A junction between the base part 141 and the extension part 140 includes a bend TR. The first magnetic elements 14 are configured to interact with the rotor magnets 123 disposed on the rotatable component 121, maintaining the light pass aperture 110 in an enlarged state (the detailed operation will be explained later). In this embodiment, the first magnetic elements 14 are embedded within the fixed component 120.

As shown in Fig. 2 and Fig. 3, the two second magnetic elements 15 are fixed to the fixed component 120, and the two second magnetic elements 15 are respectively disposed corresponding to the two driving magnets 124 so as to generate a preload force between the second magnetic elements 15 and the driving magnets 124 to maintain the operation of the rotatable component 121 relative to the fixed component 120. In this embodiment, the second magnetic elements 15 are embedded within the fixed component 120.

The attractive force mechanism provides an attractive force AF exerted between the rotatable component 121 and the fixed component 120, and the attractive force AF includes a magnetic force exerted by the rotatable component 121 on the first magnetic elements 14. Additionally, the attractive force mechanism provides a driving force exerted on the rotatable blades 11 for maintaining the light pass aperture 110 in an enlarged state. In this embodiment, the magnetic force of the rotatable component 121 is exerted between the first magnetic elements 14 and the rotor magnets 123. Specifically, as shown in Fig. 4 and Fig. 5, the rotor magnets 123 disposed on the rotatable component 121 correspond to the first magnetic elements 14 disposed on the fixed component 120. Through the magnetic force generated between the rotor magnets 123 and the first magnetic elements 14, the rotor magnets 123 are constantly subjected to the attractive force AF towards the first magnetic elements 14, which enables the rotation of the rotatable component 121 relative to the fixed component 120 even when the optical lens module 9 is not powered (e.g., when no current is passing through the coils 125), thereby providing the driving force to rotate the rotatable blades 11 in a direction that maintains the light pass aperture 110 in the enlarged state.

When a maximum field of view of the optical lens module 9 is FOV, the following condition is satisfied: 50 degrees ≤ FOV ≤ 105 degrees. When an f-number of the optical lens module 9 is FNO, the following condition is satisfied: 0.9 ≤ FNO ≤ 5.6.

As shown in Fig. 10, when a height of each of the first magnetic elements 14 is HM, and a height of each of the bearing elements 122 is HB, the following conditions are satisfied: HM = 1.314 mm; HB = 0.8 mm; and HB/HM = 0.609.

The present disclosure is not limited to the configuration of the first magnetic elements 14 described above. Hereinafter, additional five exemplary configurations of first magnetic elements 14a, 14b, 14c, 14d, and 14e of the present disclosure are further provided. The first magnetic elements 14a, 14b, 14c, 14d, and 14e in the following exemplary configurations are similar to the first magnetic elements 14 described above. The same or similar reference numerals represent the same or similar components, and functions and effects provided by those components are the same as described above, so an explanation in this regard will not be provided again.

For example, please refer to Fig. 11 to Fig. 13, which are perspective views respectively illustrating one first magnetic element and another first magnetic element and a front view of one of the first magnetic elements according to another configuration of the present disclosure. In one exemplary configuration of the present disclosure, each of the first magnetic elements 14a includes an extension part 140a and a base part 141a that are connected to each other. Each of the extension parts 140a includes an elastic section 1400a, and the elastic section 1400a can have a hollow structure HST. Moreover, when a height of each of the extension parts 140a is HE, and a height of each of the elastic sections 1400a is HS, the following conditions are satisfied: HS = 0.614 mm; HE = 1.314 mm; and HS/HE = 0.467. Moreover, when a height of each of the first magnetic elements 14a is HM, and a height of each of the bearing elements 122 is HB, the following conditions are satisfied: HM = 1.314 mm; HB = 0.8 mm; and HB/HM = 0.609.

For another example, please refer to Fig. 14 to Fig. 16, which are perspective views respectively illustrating one first magnetic element and another first magnetic element and a front view of one of the first magnetic elements according to another configuration of the present disclosure. In one exemplary configuration of the present disclosure, each of the first magnetic elements 14b includes an extension part 140b and a base part 141b that are connected to each other. Each of the extension parts 140b includes an elastic section 1400b, and two sides of the elastic section 1400b each has a zigzag shaped structure TS. Moreover, when a height of each of the extension parts 140b is HE, and a height of each of the elastic sections 1400b is HS, the following conditions are satisfied: HS = 0.614 mm; HE = 1.314 mm; and HS/HE = 0.467. Moreover, a height of each of the first magnetic elements 14b is HM, and a height of each of the bearing elements 122 is HB, the following conditions are satisfied: HM = 1.314 mm; HB = 0.8 mm; and HB/HM = 0.609.

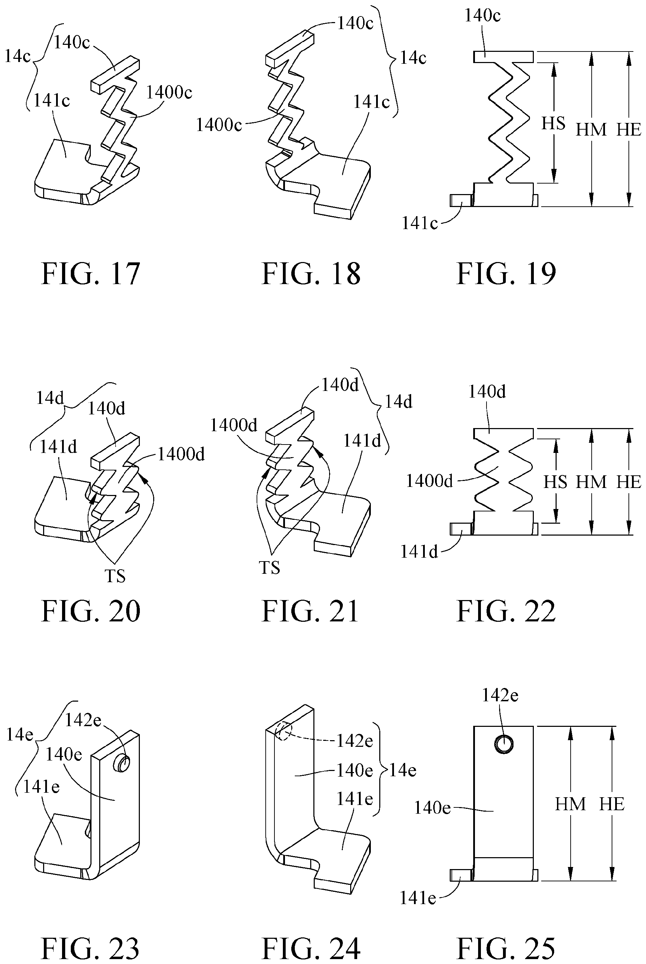

For another example, please refer to Fig. 17 to Fig. 19, which are perspective views respectively illustrating one first magnetic element and another first magnetic element and a front view of one of the first magnetic elements according to another configuration of the present disclosure. In one exemplary configuration of the present disclosure, each of the first magnetic elements 14c includes an extension part 140c and a base part 141c that are connected to each other. Each of the extension parts 140c includes an elastic section 1400c, and the elastic section 1400c is in a zigzag shape. Moreover, when a height of each of the extension parts 140c is HE, and a height of each of the elastic sections 1400c is HS, the following conditions are satisfied: HS = 1.02 mm; HE = 1.314 mm; and HS/HE = 0.776. Moreover, when a height of each of the first magnetic elements 14c is HM, and a height of each of the bearing elements 122 is HB, the following conditions are satisfied: HM = 1.314 mm; HB = 0.8 mm; and HB/HM = 0.609.

For another example, please refer to Fig. 20 to Fig. 22, which are perspective views respectively illustrating one first magnetic element and another first magnetic element and a front view of one of the first magnetic elements according to another configuration of the present disclosure. In one exemplary configuration of the present disclosure, each of the first magnetic elements 14d includes an extension part 140d and a base part 141d that are connected to each other. Each of the extension parts 140d includes an elastic section 1400d, and two sides of the elastic section 1400d each has a zigzag shaped structure TS. Moreover, when a height of each of the extension parts 140d is HE, and a height of each of the elastic sections 1400d is HS, the following conditions are satisfied: HS = 0.614 mm; HE = 0.901 mm; and HS/HE = 0.681. Moreover, when a height of each of the first magnetic elements 14d is HM, and a height of each of the bearing elements 122 is HB, the following conditions are satisfied: HM = 0.901 mm; HB = 0.8 mm; and HB/HM = 0.888.

For another example, please refer to Fig. 23 to Fig. 25, which are perspective views respectively illustrating one first magnetic element and another first magnetic element and a front view of one of the first magnetic elements according to another configuration of the present disclosure. In one exemplary configuration of the present disclosure, each of the first magnetic elements 14e includes an extension part 140e and a base part 141e that are connected to each other. Each of the first magnetic elements 14e further includes a buffer part 142e disposed on the extension part 140e. Moreover, the buffer parts 142e can, for example, protrude from the fixed component 120 and respectively correspond to the rotor magnets 123. Moreover, when a height of each of the first magnetic elements 14e is HM, and a height of each of the bearing elements 122 is HB, the following conditions are satisfied: HM = 1.314 mm; HB = 0.8 mm; and HB/HM = 0.609.

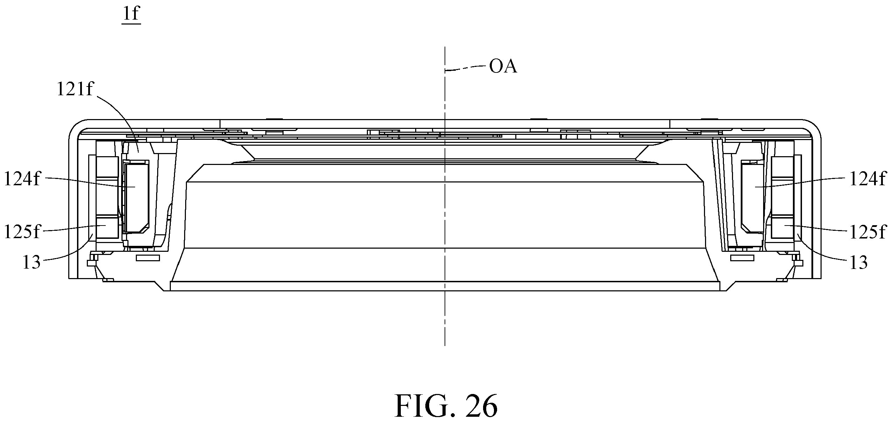

As shown in Fig. 6, in the 1st embodiment of the present disclosure, the corresponding driving magnet 124 and coil 125 are disposed corresponding to each other in the direction parallel to the optical axis OA and collectively serve as a bottom driving mechanism for the rotatable component 121 to thereby control the rotation of the rotatable component 121 from the bottom in a bottom-driving manner. However, the present disclosure is not limited to the configuration of the driving part 12 described above. For example, please refer to Fig. 26, which is a schematic view illustrating the arrangement of a driving part of an adjustable aperture assembly according to another configuration of the present disclosure. In another exemplary configuration of the present disclosure, an adjustable aperture assembly if is similar to the adjustable aperture assembly 1 as described above. The same or similar reference numerals represent the same or similar components, and functions and effects provided by those components are the same as described above, so an explanation in this regard will not be provided again. As shown in Fig. 26, corresponding driving magnet 124f and coil 125f are disposed corresponding to each other in the direction perpendicular to the optical axis OA and collectively serve as a side driving mechanism for the rotatable component 121f to thereby control the rotation of the rotatable component 121f from the lateral side in a side-driving manner.

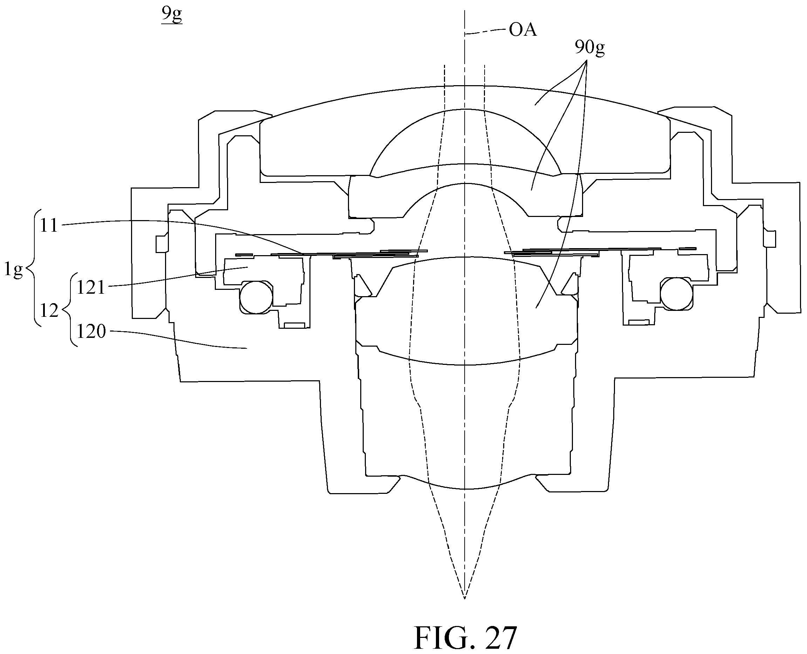

As shown in Fig. 7, in the 1st embodiment of the present disclosure, the adjustable aperture assembly 1 is disposed on the object side of the lens element 90 and serves as a front stop. However, the present disclosure is not limited to the arrangement of the optical lens module 9 as described above. For example, please refer to Fig. 27, which is a cross-sectional view of an optical lens module according to another configuration of the 1st embodiment of the present disclosure. In another exemplary configuration of the present disclosure, an optical lens module 9g is similar to the optical lens module 9 as described above. The same or similar reference numerals represent the same or similar components, and functions and effects provided by those components are the same as described above, so an explanation in this regard will not be provided again. As shown in Fig. 27, an adjustable aperture assembly 1g is disposed between lens elements 90g and serves as a middle stop.

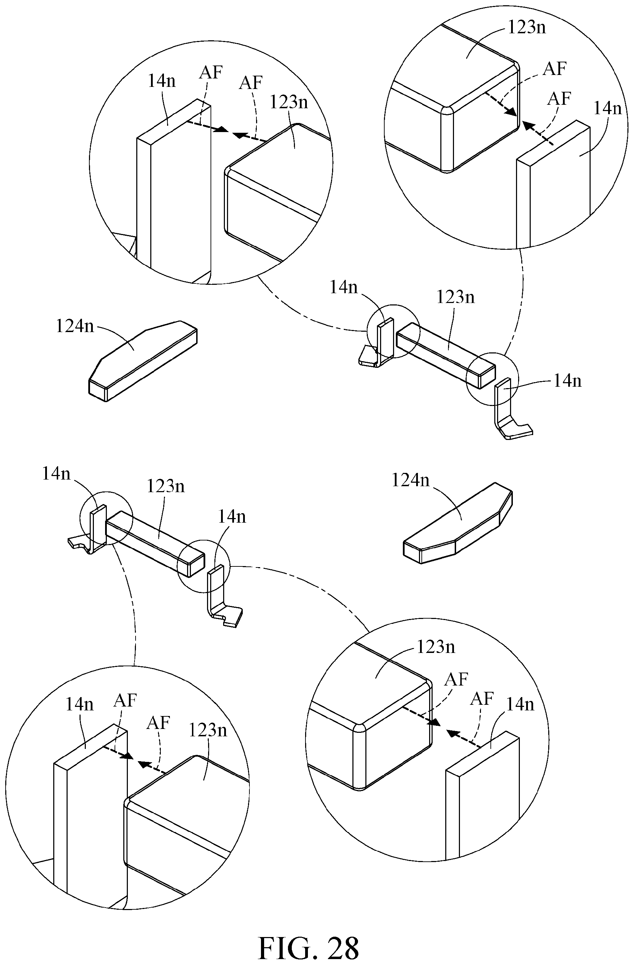

In the 1st embodiment of the present disclosure, the attractive force AF provided through the attractive force mechanism of the adjustable aperture assembly 1 is generated between the corresponding first magnetic element 14 and rotor magnet 123 and exerted between the rotatable component 121 and the fixed component 120. In addition, the two first magnetic elements 14 are respectively located at one side of the two rotor magnets 123, so that the interaction between the first magnetic elements 14 and the rotor magnets 123 generates a magnetic force. However, the present disclosure is not limited to maintaining the light pass aperture in the enlarged state solely through an attractive force mechanism generated on a single side of the rotor magnet in the adjustable aperture assembly 1. For example, please refer to Fig. 28, which is a schematic view illustrating the arrangement and operation of an attractive force mechanism of an adjustable aperture assembly according to another configuration of the present disclosure. In another exemplary configuration of the present disclosure, adjustable aperture assembly (its reference numeral is omitted) is similar to the adjustable aperture assembly 1 as described above. The same or similar reference numerals represent the same or similar components, and functions and effects provided by those components are the same as described above, so an explanation in this regard will not be provided again. Firstly, in the exemplary configuration of Fig. 28, the number of rotor magnets 123n and the number of driving magnets 124n are respectively the same as those in the adjustable aperture assembly 1 as described above (i.e., both are two) and are also alternatively arranged along a circumferential direction D1. However, the difference(s) therebetween is that the number of first magnetic elements 14n in the exemplary configuration as shown in Fig. 28 is four. Moreover, two of the four first magnetic elements 14n are respectively disposed on opposite sides of one of the rotor magnets 123n along the circumferential direction D1, and the other two of the four first magnetic elements 14n are respectively disposed on opposite sides of the other of the rotor magnets 123n along the circumferential direction D1. Moreover, two of the first magnetic elements 14n symmetrically arranged around an optical axis OA and the two rotor magnets 123n collectively constitute the configuration of one attractive force mechanism, and the other two of the first magnetic elements 14n symmetrically arranged around the optical axis OA and the two rotor magnets 123n collectively constitute the configuration of another attractive force mechanism. The configuration of the bilateral attractive force mechanisms provides an attractive force AF exerted between the rotatable component and the fixed component, and the attractive force AF includes a magnetic force exerted by the rotatable component on the first magnetic elements 14n. In addition, the bilateral attractive force mechanisms provide a driving force exerted on the rotatable blades, maintaining the light pass aperture in an enlarged state. Specifically, the magnetic force generated between the rotor magnet 123n and the first magnetic elements 14n makes the rotor magnet 123n constantly subjected to the attractive force AF towards the first magnetic elements 14n located on both sides thereof, which maintains the position of the rotatable component relative to the fixed component when no power is supplied to the optical lens module, thereby maintaining the light pass aperture in the enlarged state.

## 2nd Embodiment

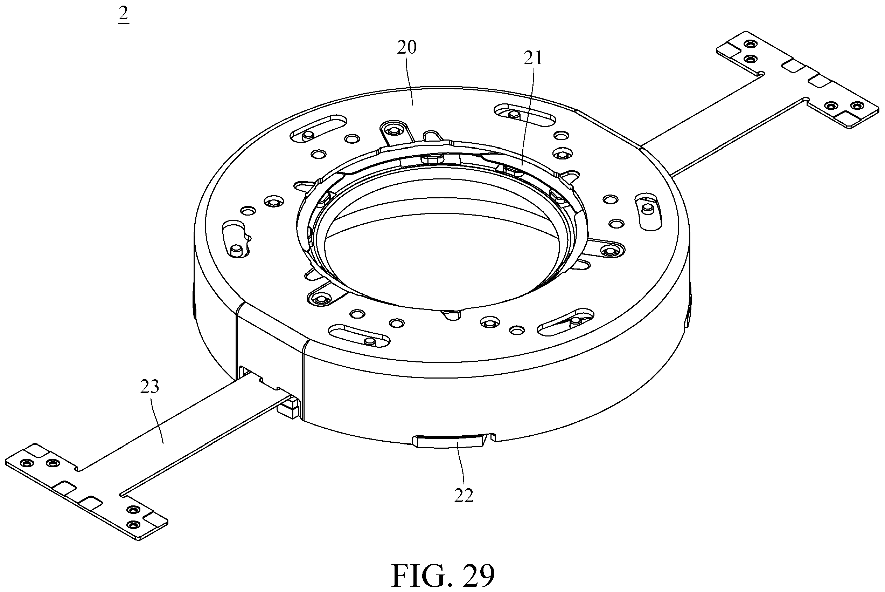

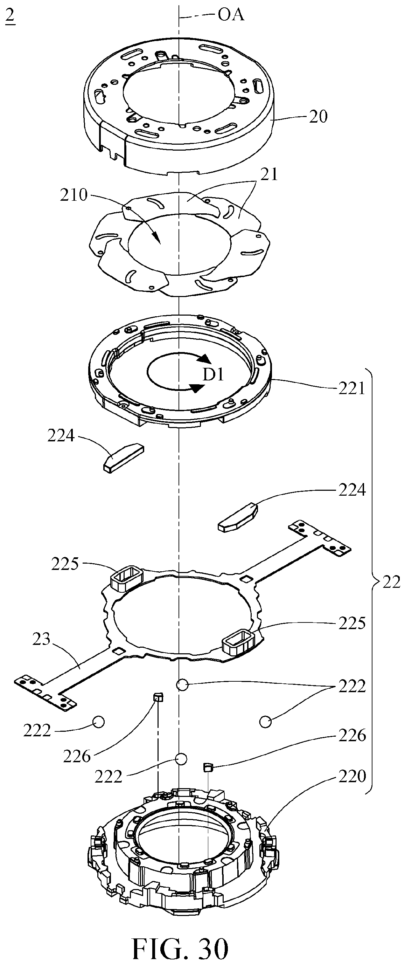

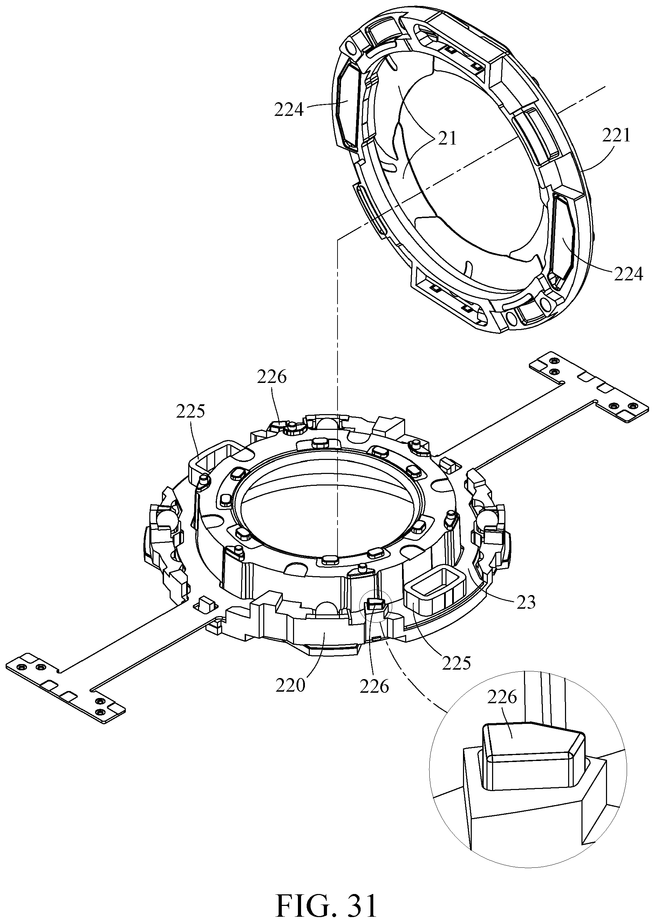

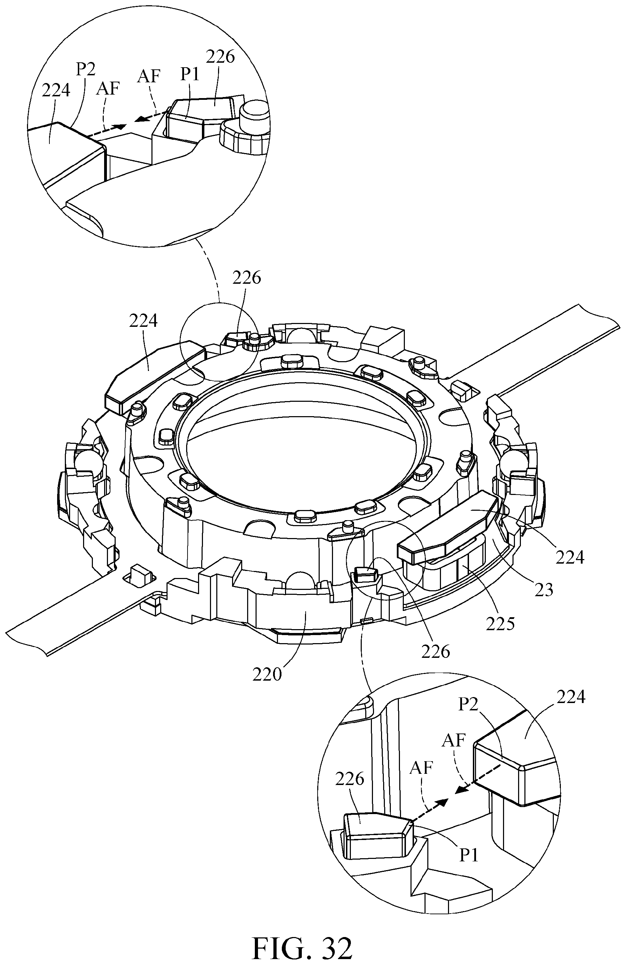

Fig. 29 is a perspective view of an adjustable aperture assembly of an optical lens module according to the 2nd embodiment of the present disclosure, Fig. 30 is an exploded view of the adjustable aperture assembly in Fig. 29, Fig. 31 is a partially exploded view of the adjustable aperture assembly in Fig. 29 without an upper cover, and Fig. 32 is a schematic view illustrating the operation of a preload force mechanism of the adjustable aperture assembly in Fig. 29.

The optical lens module (its reference numeral is omitted) includes at least one lens element (its reference numeral is omitted) and an adjustable aperture assembly 2, and the adjustable aperture assembly 2 is disposed corresponding to the lens element.

The adjustable aperture assembly 2 includes an upper cover 20, a plurality of rotatable blades 21, a driving part 22, a printed circuit board 23 and a preload force mechanism. Moreover, the rotatable blades 21 are rotatably arranged around an optical axis OA of the lens element and collectively form a light pass aperture 210, and the optical axis OA passes through the light pass aperture 210.

The upper cover 20 is disposed on the driving part 22, the upper cover 20 and the driving part 22 collectively form an inner space (its reference numeral is omitted) therebetween, and the rotatable blades 21 are disposed in the inner space. In addition, the printed circuit board 23 is disposed corresponding to and electrically connected to the driving part 22. Specifically, the driving part 22 includes a fixed component 220, a rotatable component 221, four bearing elements 222, two stator magnets 226, two driving magnets 224, and two coils 225. Moreover, the upper cover 20 is fixed to the fixed component 220, and the inner space is formed between the upper cover 20 and the fixed component 220 for the rotatable blades 21 to be disposed therein. Furthermore, the printed circuit board 23 is attached to the fixed component 220.

The fixed component 220 and the rotatable component 221 are disposed corresponding to each other, and the rotatable component 221 has a rotational degree of freedom along a circumferential direction D1 around and perpendicular to the optical axis OA relative to the fixed component 220. Furthermore, the rotatable component 221 is disposed corresponding to the rotatable blades 21, and the rotatable component 221 is configured to drive the rotatable blades 21 to rotate for adjusting an aperture size of the light pass aperture 210. It should be understood that the upper cover 20, the rotatable component 221, and the fixed component 220 all have openings disposed corresponding to the light pass aperture 210 of the rotatable blades 21, allowing light to travel through these openings and the light pass aperture 210.

The bearing elements 222 are disposed between the rotatable component 221 and the fixed component 220 and arranged around the optical axis OA. The bearing elements 222 support the rotatable component 221, allowing the rotatable component 221 to rotate relative to the fixed component 220 along the circumferential direction D1.

The two stator magnets 226 are disposed on the fixed component 220, and the two stator magnets 226 are located on opposite sides of the fixed component 220. The two driving magnets 224 are disposed on the rotatable component 221, and the two driving magnets 224 are located on opposite sides of the rotatable component 221. In this embodiment, the two stator magnets 226 are respectively disposed adjacent and correspond to the two driving magnets 224 along the circumferential direction D1 that is perpendicular and surrounds the optical axis OA.

The two coils 225 are disposed on and electrically connected to the printed circuit board 23, and the two coils 225 are disposed corresponding to the two driving magnets 224, respectively, for driving the rotatable component 221 to rotate, thereby driving the rotation of the rotatable blades 21 for adjusting the aperture size of the light pass aperture 210.

The preload force mechanism provides an attractive force AF exerted between the rotatable component 221 and the fixed component 220, and the attractive force AF includes a magnetic force exerted by the rotatable component 221 on the stator magnets 226. Additionally, the preload force mechanism provides a driving force exerted on the rotatable blades 21 for maintaining the light pass aperture 210 in an enlarged state. In this embodiment, the magnetic force of the rotatable component 221 is exerted between the stator magnets 226 and the driving magnets 224. Specifically, as shown in Fig. 31 and Fig. 32, the driving magnets 224 disposed on the rotatable component 221 correspond to the stator magnets 226 disposed on the fixed component 220. Through the magnetic force generated between the driving magnets 224 and the stator magnets 226, the driving magnets 224 are constantly subjected to the attractive force AF towards the stator magnets 226, which enables the rotation of the rotatable component 221 relative to the fixed component 220 even when the optical lens module is not powered (e.g., when no current is passing through the coils 225), thereby providing the driving force to rotate the rotatable blades 21 in a direction that maintains the light pass aperture 210 in the enlarged state.

When a maximum field of view of the optical lens module is FOV, the following condition is satisfied: 50 degrees $\leq$ FOV $\leq$ 105 degrees. When an f-number of the optical lens module is FNO, the following condition is satisfied: 0.9 $\leq$ FNO $\leq$ 5.6.

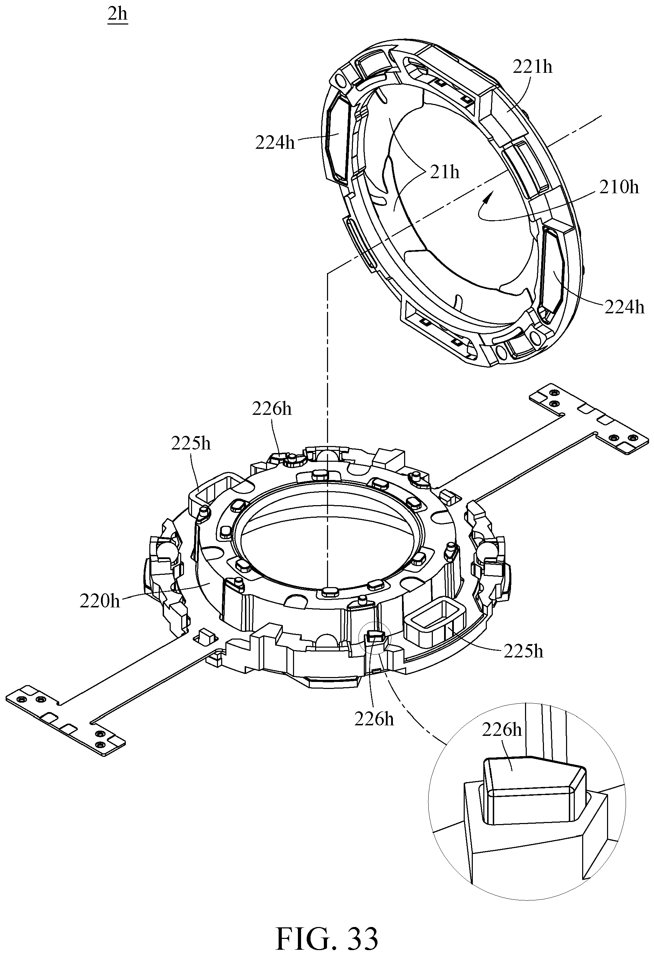

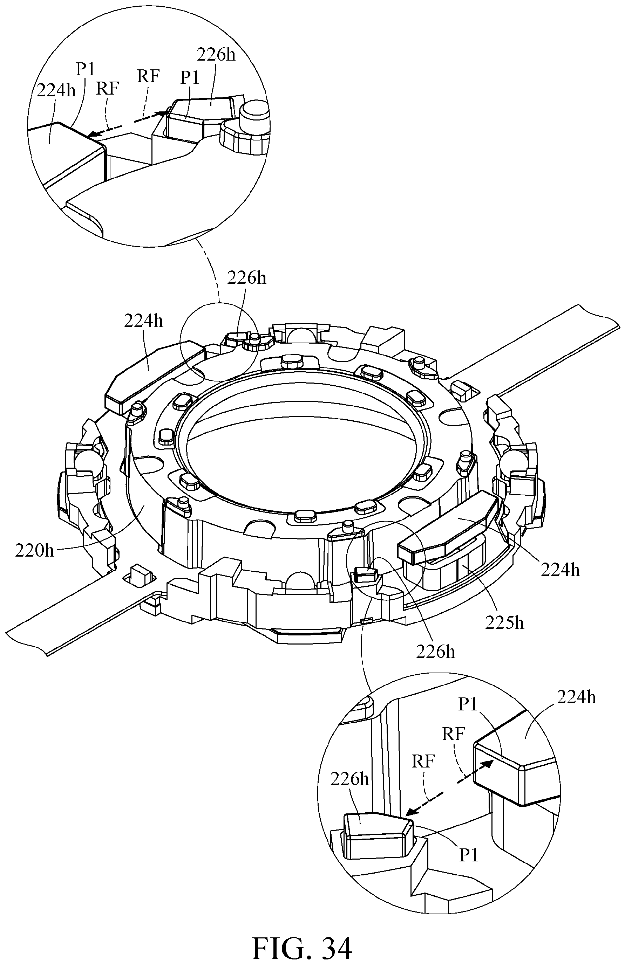

As shown in Fig. 31 and Fig. 32, in the 2nd embodiment of the present disclosure, each of the stator magnets 226 has a first magnetic pole P1 on one side thereof adjacent to the driving magnet 224 corresponding thereto, and each of the driving magnets 224 has a second magnetic pole P2 on one side thereof adjacent to the stator magnet 226 corresponding thereto. The first magnetic pole P1 and the second magnetic pole P2 are unlike poles, thereby generating the attractive force AF between the driving magnet 224 and the stator magnet 226. However, the present disclosure is not limited to the aforementioned magnetic pole arrangement of the stator magnet 226 and the driving magnet 224. For example, please refer to Fig. 33 and Fig. 34. Fig. 33 is a partially exploded view of an adjustable aperture assembly without an upper cover according to another configuration of the 2nd embodiment of the present disclosure, and Fig. 34 is a schematic view illustrating the operation of a preload force mechanism of the adjustable aperture assembly in Fig. 33. In another exemplary configuration of the present disclosure, an adjustable aperture assembly 2h is similar to the adjustable aperture assembly 2 as described above. The same or similar reference numerals represent the same or similar components, and functions and effects provided by those components are the same as described above, so an explanation in this regard will not be provided again. In this exemplary configuration, the preload force mechanism provides a repulsive force RF exerted between a rotatable component 221h and a fixed component 220h, and the repulsive force RF includes a magnetic force exerted by the rotatable component 221h on stator magnets 226h. Additionally, the preload force mechanism provides a driving force exerted on rotatable blades 21h for maintaining a light pass aperture 210h in an enlarged state. In this embodiment, the magnetic force of the rotatable component 221h is exerted between the stator magnets 226h and driving magnets 224h. Specifically, as shown in Fig. 33 and Fig. 34, each of the stator magnets 226h has a first magnetic pole P1 on one side thereof adjacent to the driving magnet 224h corresponding thereto, and each of the driving magnets 224h also has a first magnetic pole P1 of like pole on one side thereof adjacent to the stator magnet 226h corresponding thereto, thereby generating the repulsive force RF between the driving magnets 224h and the stator magnets 226h due to the interaction of like poles. Therefore, the driving magnets 224h are constantly subjected to the repulsive force RF away from the stator magnets 226h, which enables the rotation of the rotatable component 221h relative to the fixed component 220h even when the optical lens module is not powered (e.g., when no current is passing through coils 225h), thereby providing the driving force to rotate the rotatable blades 21h in a direction that maintains the light pass aperture 210h in the enlarged state.

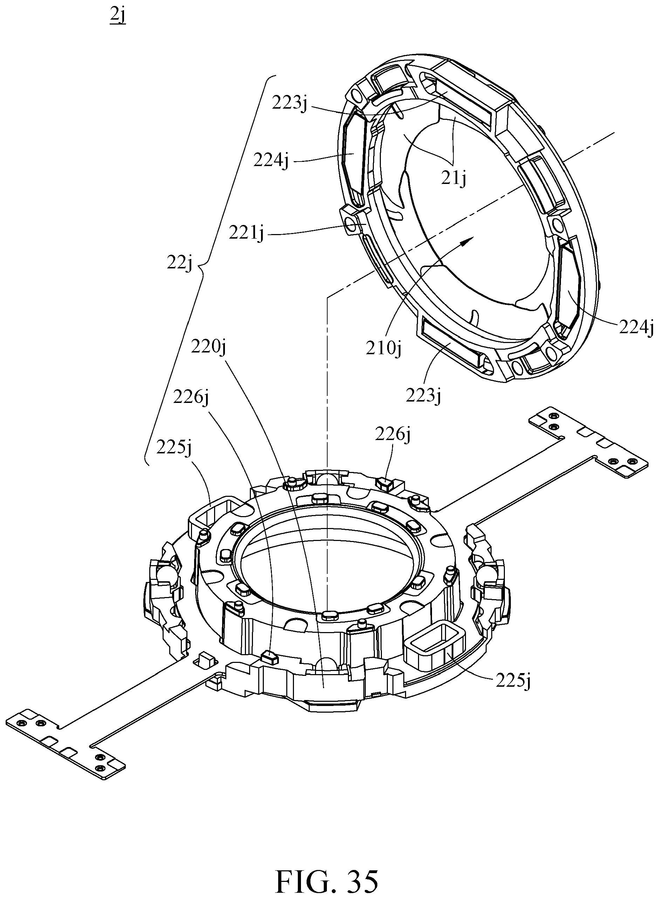

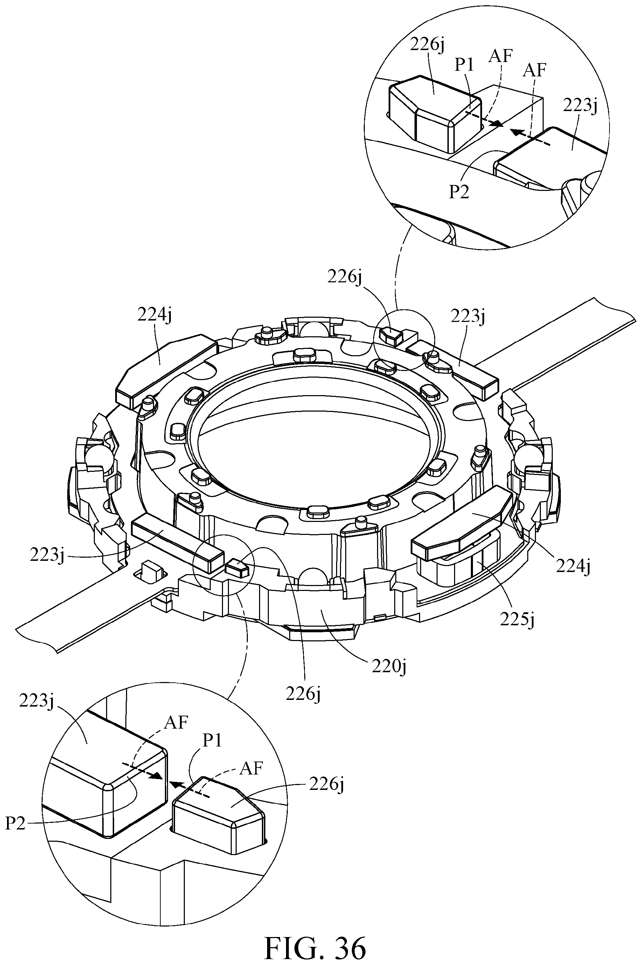

In the 2nd embodiment of the present disclosure, the magnetic force of the rotatable component 221 is exerted between the stator magnets 226 and the driving magnets 224. However, in the present disclosure, the magnetic force provided by the preload force mechanism is not limited to being exerted between the stator magnets 226 and the driving magnets 224 as described above. For example, please refer to Fig. 35 and Fig. 36. Fig. 35 is a partially exploded view of an adjustable aperture assembly without an upper cover according to another configuration of the present disclosure, and Fig. 36 is a schematic view illustrating the operation of a preload force mechanism of the adjustable aperture assembly in Fig. 35. In another exemplary configuration of the present disclosure, an adjustable aperture assembly 2j is similar to the adjustable aperture assembly 2 as described above. The same or similar reference numerals represent the same or similar components, and functions and effects provided by those components are the same as described above, so an explanation in this regard will not be provided again. As shown in Fig. 35 and Fig. 36, a driving part 22j further includes two rotor magnets 223j, and the two rotor magnets 223j are disposed on a rotatable component 221j and respectively located on opposite sides of the rotatable component 221j. Additionally, the two rotor magnets 223j and two driving magnets 224j are alternatively arranged along a circumferential direction D1, and the two rotor magnets 223j are respectively located adjacent and correspond to two stator magnets 226j fixed on a fixed component 220j. A preload force mechanism provides an attractive force AF exerted between the rotatable component 221j and the fixed component 220j, and the attractive force AF includes a magnetic force exerted by the rotatable component 221j on the stator magnets 226j. Furthermore, the preload force mechanism provides a driving force exerted on rotatable blades 21j for maintaining a light pass aperture 210j in an enlarged state. In this exemplary configuration, the magnetic force of the rotatable component 221j is exerted between the stator magnets 226j and the rotor magnets 223j. Specifically, the rotor magnets 223j disposed on the rotatable component 221j correspond to the stator magnets 226j disposed on the fixed component 220j. Through the magnetic force generated between the rotor magnets 223j and the stator magnets 226j, the rotor magnets 223j are constantly subjected to the attractive force AF towards the stator magnets 226j, which enables the rotation of the rotatable component 221j relative to the fixed component 220j even when the optical lens module is not powered (e.g., when no current is passing through coils 225j), thereby providing the driving force to rotate the rotatable blades 21j in a direction that maintains the light pass aperture 210j in the enlarged state.

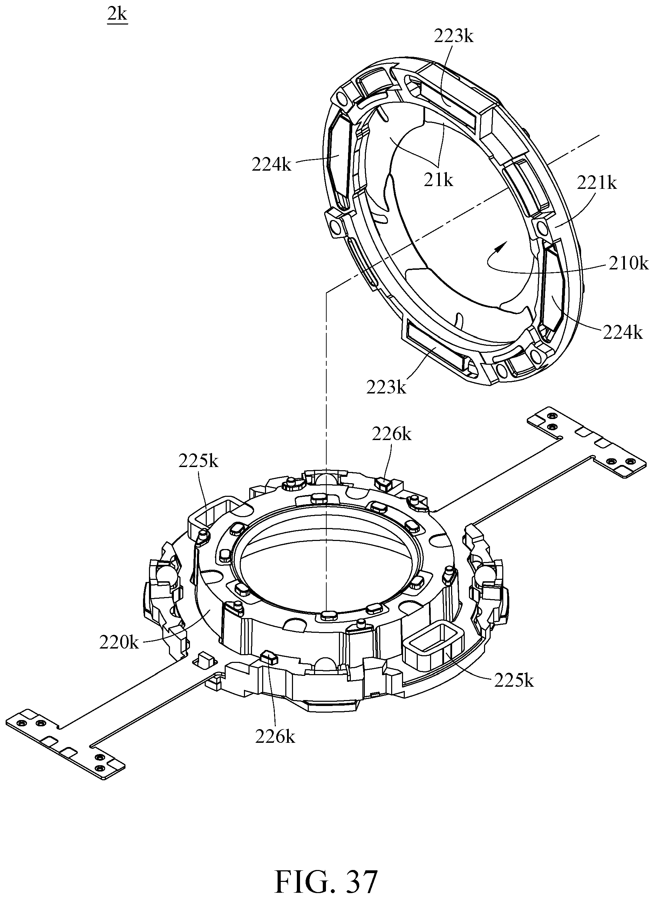

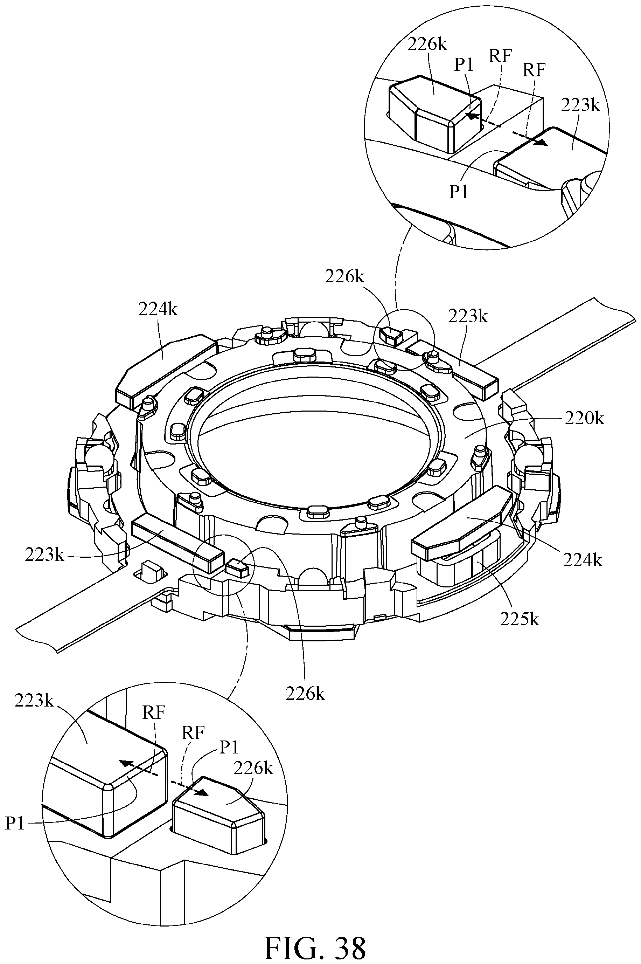

In the exemplary configuration as shown in Fig. 35 and Fig. 36, each of the stator magnet 226j has a first magnetic pole P1 on one side thereof adjacent to the rotor magnet 223j corresponding thereto, and each of the rotor magnets 223j has a second magnetic pole P2 on one side thereof adjacent to the stator magnet 226j corresponding thereto. The first magnetic pole P1 and the second magnetic pole P2 are unlike poles, thereby generating the attractive force AF between the rotor magnet 223j and the stator magnet 226j. However, the present disclosure is not limited to the aforementioned magnetic pole arrangement of the stator magnets 226j and the rotor magnets 223j. For example, please refer to Fig. 37 and Fig. 38. Fig. 37 is a partially exploded view of an adjustable aperture assembly without an upper cover according to another configuration of the present disclosure, and Fig. 38 is a schematic view illustrating the operation of a preload force mechanism of the adjustable aperture assembly in Fig. 37. In another exemplary configuration of the present disclosure, an adjustable aperture assembly 2k is similar to the adjustable aperture assembly 2j as described above. The same or similar reference numerals represent the same or similar components, and functions and effects provided by those components are the same as described above, so an explanation in this regard will not be provided again. As shown in Fig. 37 and Fig. 38, two rotor magnets 223k and two driving magnets 224k are alternatively arranged along a circumferential direction D1, and the two rotor magnets 223k are respectively located adjacent and correspond to two stator magnets 226k fixed on a fixed component 220k. Each of the stator magnets 226k has a first magnetic pole P1 on one side thereof adjacent to the rotor magnet 223k corresponding thereto, and each of the rotor magnets 223k also has a first magnetic pole P1 of like pole on one side thereof adjacent to the stator magnet 226k corresponding thereto, thereby generating a repulsive force RF between the rotor magnets 223k and the stator magnets 226k due to the interaction of like poles. Therefore, the rotor magnets 223k are constantly subjected to the repulsive force RF away from the stator magnets 226k, which enables the rotation of a rotatable component 221k relative to the fixed component 220k even when the optical lens module is not powered (e.g., when no current is passing through coils 225k), thereby providing the driving force to rotate rotatable blades 21k in a direction that maintains the light pass aperture 210k in an enlarged state.

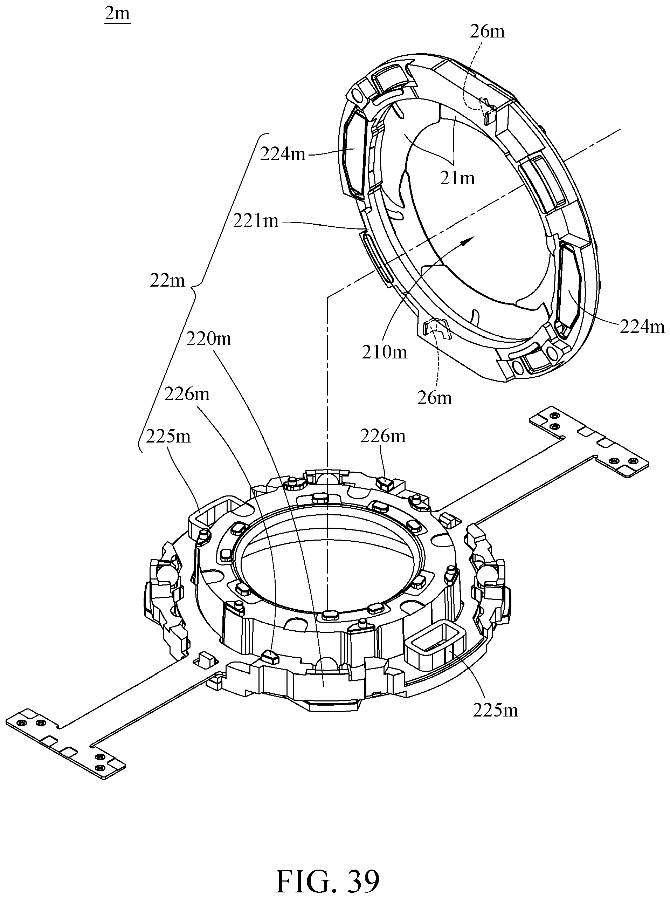

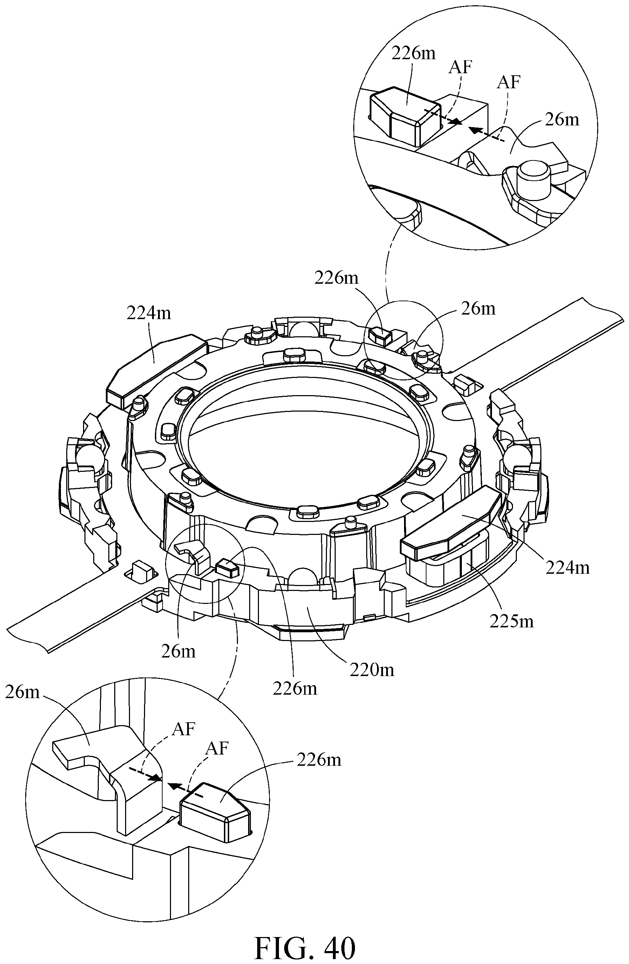

In the exemplary configurations as described above, the magnetic force of the rotatable component is exerted between the stator magnet and the driving magnet, or exerted between the stator magnet and the rotor magnet. However, in the present disclosure, the magnetic force provided by the preload force mechanism is not limited to being exerted between the abovementioned components. For example, please refer to Fig. 39 and Fig. 40. Fig. 39 is a partially exploded view of an adjustable aperture assembly without an upper cover according to another configuration of the present disclosure, and Fig. 40 is a schematic view illustrating the operation of a preload force mechanism of the adjustable aperture assembly in Fig. 39. In another exemplary configuration of the present disclosure, an adjustable aperture assembly 2m is similar to the adjustable aperture assembly 2 as described above. The same or similar reference numerals represent the same or similar components, and functions and effects provided by those components are the same as described above, so an explanation in this regard will not be provided again. As shown in Fig. 39 and Fig. 40, the adjustable aperture assembly 2m further includes two third magnetic elements 26m, and the two third magnetic elements 26m are fixed to (e.g., embedded within) a rotatable component 221m of a driving part 22m and respectively located on opposite sides of the rotatable component 221m. Furthermore, two third magnetic elements 26m and two driving magnets 224m disposed on a rotatable component 221m are alternatively arranged along a circumferential direction D1, and the two third magnetic elements 26m are respectively located adjacent and correspond to two stator magnets 226m fixed on a fixed component 220m. A preload force mechanism provides an attractive force AF exerted between the rotatable component 221m and the fixed component 220m, and the attractive force AF includes a magnetic force exerted by the rotatable component 221m on the stator magnets 226m. Additionally, the preload force mechanism provides a driving force exerted on rotatable blades 21m for maintaining a light pass aperture 210m in an enlarged state. In this exemplary configuration, the magnetic force of the rotatable component 221m is exerted between the stator magnets 226m and the third magnetic elements 26m. Specifically, the third magnetic elements 26m disposed on the rotatable component 221m correspond to the stator magnets 226m disposed on the fixed component 220m. Through the magnetic force generated between the third magnetic elements 26m and the stator magnets 226m, the third magnetic elements 26m are constantly subjected to the attractive force AF towards the stator magnets 226m, which enables the rotation of the rotatable component 221m relative to the fixed component 220m even when the optical lens module is not powered (e.g., when no current is passing through coils 225m), thereby providing the driving force to rotate the rotatable blades 21m in a direction that maintains the light pass aperture 210m in the enlarged state.

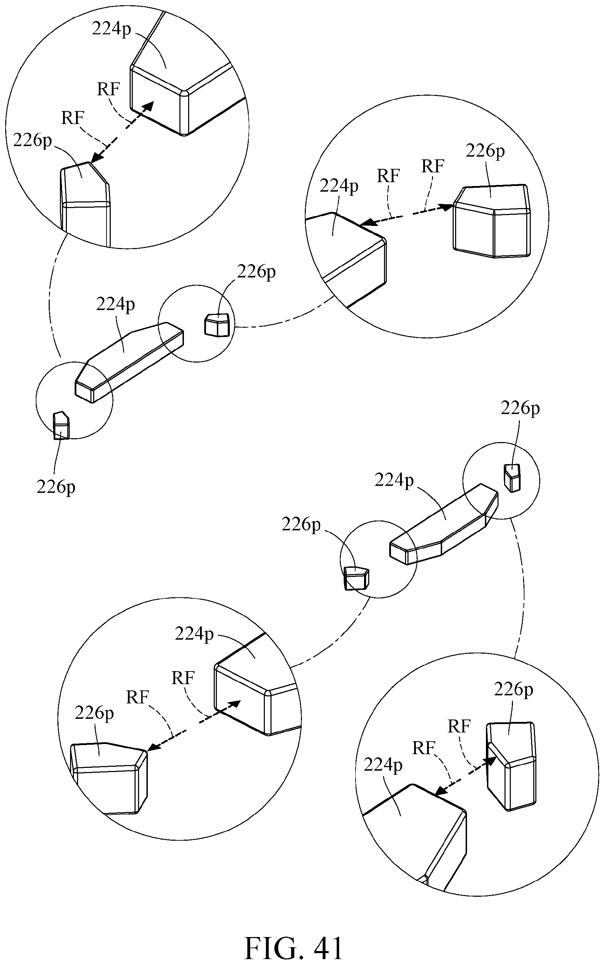

In the 2nd embodiment of the present disclosure, the number of the stator magnets 226 is two, and the stator magnets 226 are respectively located at one side of the two driving magnets 224 to interact with them and generate attractive force. However, the present disclosure is not limited to the number of the stator magnets 226 as described above, nor is it limited to the magnetic force between the stator magnets 226 and the driving magnets 224 serving as the attractive force as described above. For example, please refer to Fig. 41, which is a schematic view illustrating the arrangement and operation of a preload force mechanism of an adjustable aperture assembly according to another configuration of the present disclosure. In another exemplary configuration of the present disclosure, an adjustable aperture assembly (its reference numeral is omitted) is similar to the adjustable aperture assembly 2 as described above. The same or similar reference numerals represent the same or similar components, and functions and effects provided by those components are the same as described above, so an explanation in this regard will not be provided again. As shown in Fig. 41, the number of stator magnets 226p is four, and two of the four stator magnets 226p are respectively located adjacent to and on opposite sides of one of two driving magnets 224p along a circumferential direction D1, and the other two of the four stator magnets 226p are respectively located adjacent to and on opposite sides of the other of the two driving magnets 224p along the circumferential direction D1. The arrangement of a preload force mechanism as described above can provide a repulsive force RF exerted between a rotatable component and a fixed component, and the repulsive force RF includes a magnetic force exerted by the rotatable component on the stator magnets 226p. Additionally, the preload force mechanism provides a driving force exerted on rotatable blades for maintaining a light pass aperture in an enlarged state. Specifically, the magnetic force generated between the driving magnets 224p and the stator magnets 226p makes the driving magnets 224p constantly subjected to the repulsive force RF away from the stator magnets 226p located on both sides thereof, which maintains the position of the rotatable component relative to the fixed component even when the optical lens module is not powered, thereby maintaining the light pass aperture in the enlarged state. Moreover, by changing the magnetic pole arrangement of the driving magnets 224p and the stator magnets 226p, the magnetic force between the driving magnets 224p and the stator magnets 226p can also serve as an attractive force, or the magnetic force between the driving magnets 224p and the stator magnets 226p can serve as an attractive force on one side of each driving magnet 224p and a repulsive force on the other side of each driving magnet 224p, and the present disclosure is not limited thereto.

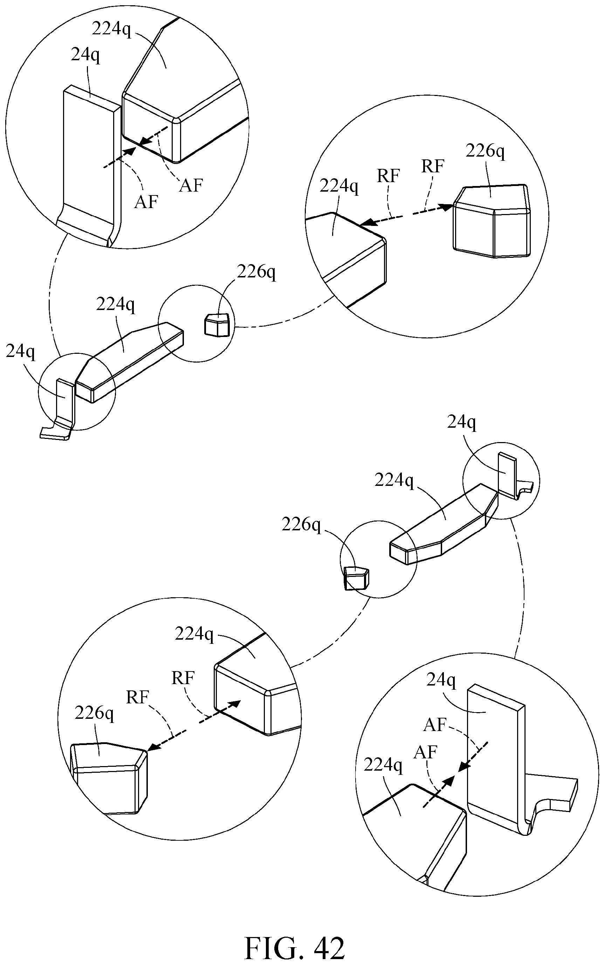

In the exemplary configuration as shown in Fig. 33 and Fig. 34, a repulsive force RF provided through a preload force mechanism of an adjustable aperture assembly 2h is generated between two stator magnets 226h and two driving magnets 224h to be exerted between a rotatable component 221h and a fixed component 220h. Moreover, the two stator magnets 226h are respectively located on one side of the two driving magnets 224h to interact with them and generate magnetic forces. However, the present disclosure is not limited to maintaining a light pass aperture in an enlarged state solely through the preload force mechanism in the adjustable aperture assembly 2h as described above. For example, please refer to Fig. 42, which is a schematic view illustrating the arrangement and operation of an attractive force mechanism and a preload force mechanism of an adjustable aperture assembly according to another configuration of the present disclosure. In another exemplary configuration of the present disclosure, an adjustable aperture assembly (its reference numeral is omitted) is similar to the adjustable aperture assembly 2h as described above. The same or similar reference numerals represent the same or similar components, and functions and effects provided by those components are the same as described above, so an explanation in this regard will not be provided again. As shown in Fig. 42, the adjustable aperture assembly further includes two first magnetic elements 24q fixed to a fixed component, one of the two first magnetic elements 24q and one of two stator magnets 226q are located adjacent to and on opposite sides of one of two driving magnets 224q along a circumferential direction D1, and the other of the two first magnetic elements 24q and the other of the two stator magnets 226q are located adjacent to and on opposite sides of the other of the two driving magnets 224q along the circumferential direction D1. Moreover, the two first magnetic elements 24q, the two stator magnets 226q, and the two driving magnets 224q are symmetrically arranged around an optical axis OA. The two first magnetic elements 24q and the two driving magnets 224q collectively constitute the arrangement of an attractive force mechanism, and the two stator magnets 226q and the two driving magnets 224q collectively constitute the arrangement of a preload force mechanism. The arrangement of the attractive force mechanism and the preload force mechanism can provide an attractive force AF and a repulsive force RF exerted between a rotatable component and a fixed component. The attractive force AF includes a magnetic force exerted by the rotatable component on the first magnetic elements 24q, and the repulsive force RF includes a magnetic force exerted by the rotatable component on the stator magnets 226q. Additionally, the attractive force mechanism and the preload force mechanism provide a driving force exerted on rotatable blades for maintaining a light pass aperture in an enlarged state. Specifically, the magnetic force generated between the driving magnets 224q and the first magnetic elements 24q makes the driving magnets 224q constantly subjected to the attractive force AF towards the first magnetic elements 24q, and the magnetic force between the driving magnets 224q and the stator magnets 226q makes the driving magnets 224q constantly subjected to the repulsive force RF away from the stator magnets 226q, which enables the rotation of the rotatable component relative to the fixed component even when the optical lens module is not powered, thereby providing the driving force to rotate the rotatable blades in a direction that maintains the light pass aperture in the enlarged state. Moreover, the attractive force AF and the repulsive force RF exerted on the driving magnets 224q are directed in the same direction along the circumferential direction D1, but the present disclosure is not limited thereto.

### 3rd Embodiment

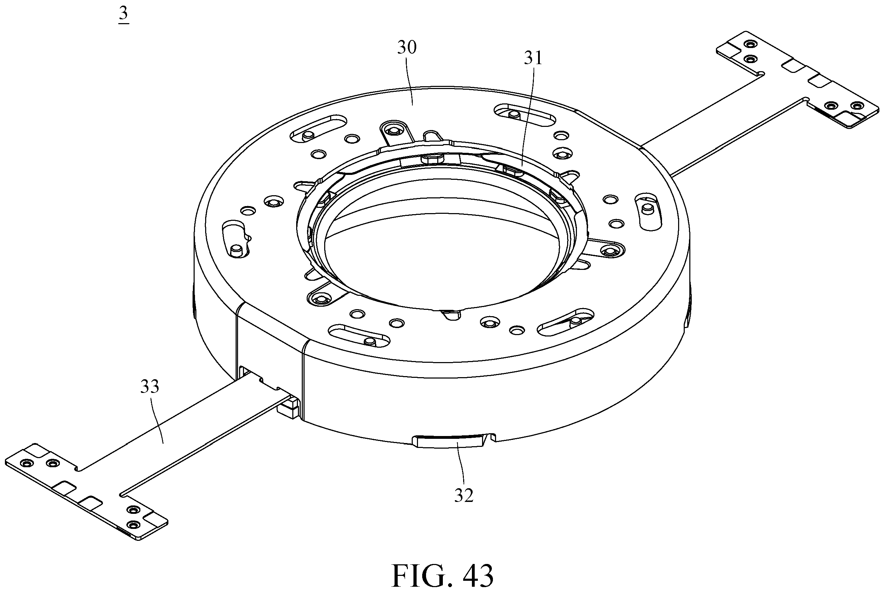

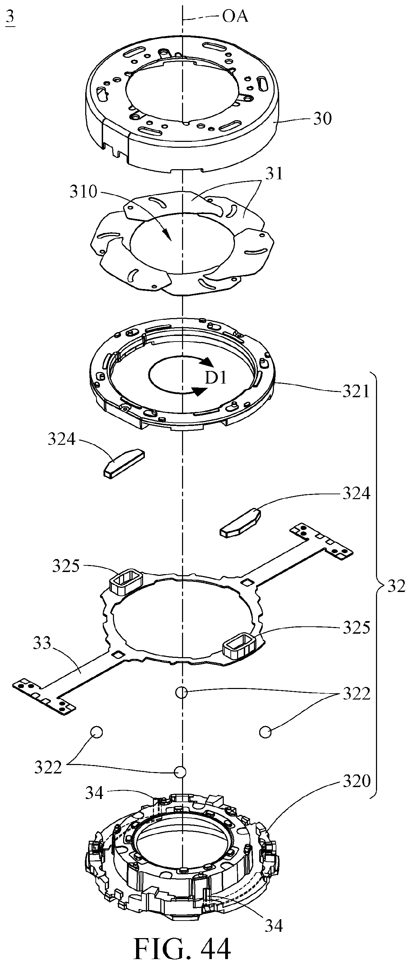

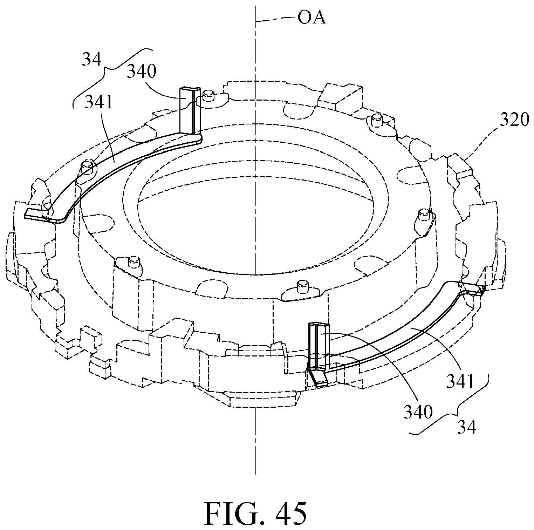

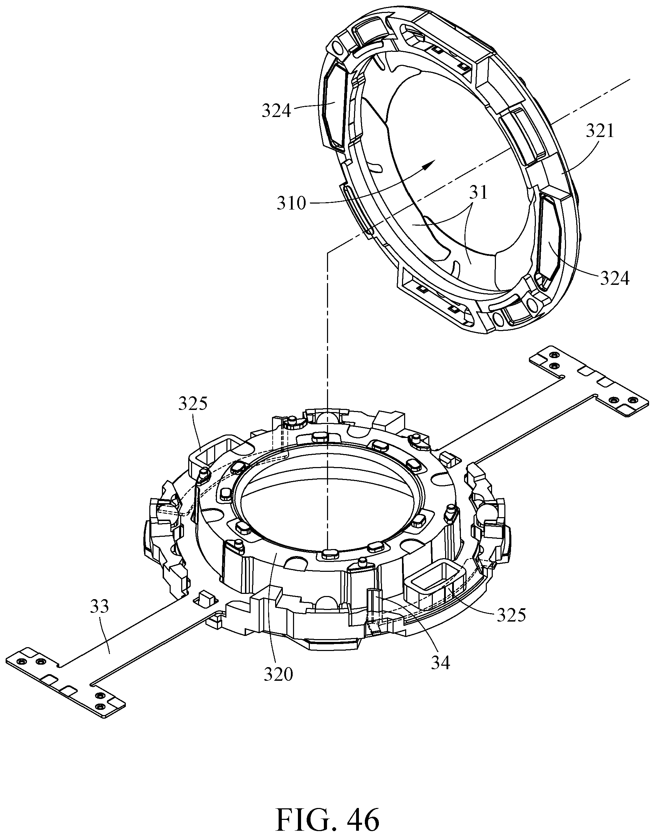

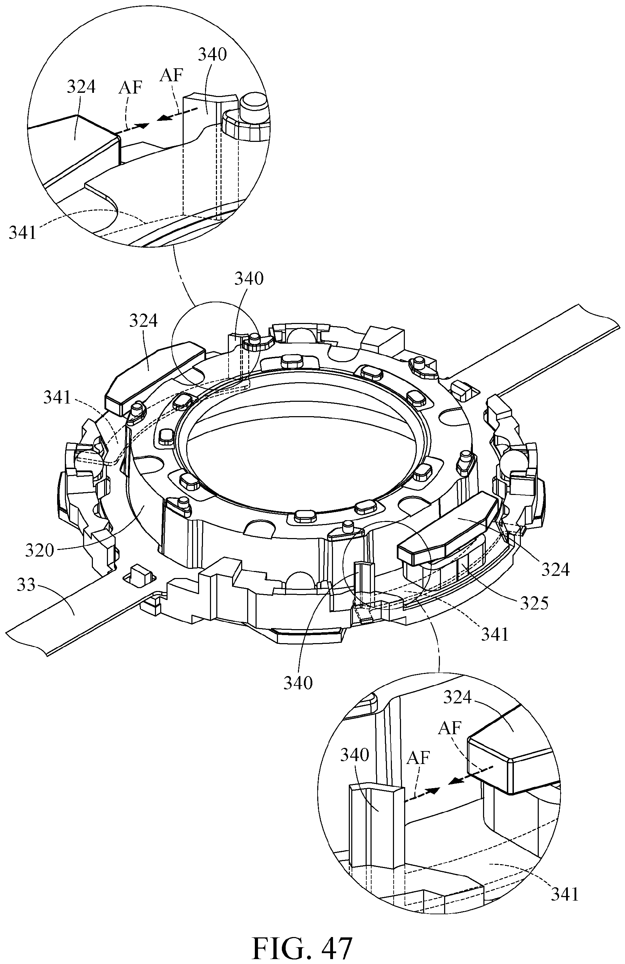

Fig. 43 is a perspective view of an adjustable aperture assembly of an optical lens module according to the 3rd embodiment of the present disclosure, Fig. 44 is an exploded view of the adjustable aperture assembly in Fig. 43, Fig. 45 is a schematic view for showing the relative positions of first magnetic elements embedded within a fixed component in Fig. 44, Fig. 46 is a partially exploded view of the adjustable aperture assembly in Fig. 43 without an upper cover, and Fig. 47 is a schematic view illustrating the operation of a preload force mechanism of the adjustable aperture assembly in Fig. 43.

The optical lens module (its reference numeral is omitted) includes at least one lens element (its reference numeral is omitted) and an adjustable aperture assembly 3, and the adjustable aperture assembly 3 is disposed corresponding to the lens element.

The adjustable aperture assembly 3 includes an upper cover 30, a plurality of rotatable blades 31, a driving part 32, a printed circuit board 33, two first magnetic elements 34 and a preload force mechanism. Moreover, the rotatable blades 31 are arranged around an optical axis OA of the lens element and collectively form a light pass aperture 310, and the optical axis OA passes through the light pass aperture 310.

The upper cover 30 is disposed on the driving part 32, the upper cover 30 and the driving part 32 collectively form an inner space (its reference numeral is omitted) therebetween, and the rotatable blades 31 are disposed in the inner space. Additionally, the printed circuit board 33 is disposed corresponding to and electrically connected to the driving part 32. Specifically, the driving part 32 includes a fixed component 320, a rotatable component 321, four bearing elements 322, two driving magnets 324, and two coils 325. Moreover, the upper cover 30 is fixed to the fixed component 320, and the inner space is formed between the upper cover 30 and the fixed component 320 for the rotatable blades 31 to be disposed therein. Furthermore, the printed circuit board 33 is attached to the fixed component 320.

The fixed component 320 and the rotatable component 321 are disposed corresponding to each other, and the rotatable component 321 has a rotational degree of freedom along a circumferential direction D1 around and perpendicular to the optical axis OA relative to the fixed component 320. Additionally, the rotatable component 321 is disposed corresponding to the rotatable blades 31, and the rotatable component 321 is configured to drive the rotatable blades 31 to rotate for adjusting an aperture size of the light pass aperture 310. It should be understood that the upper cover 30, the rotatable component 321, and the fixed component 320 all have openings disposed corresponding to the light pass aperture 310 of the rotatable blades 31, allowing light to travel through these openings and the light pass aperture 310.

The bearing elements 322 are disposed between the rotatable component 321 and the fixed component 320 and arranged around the optical axis OA. The bearing elements 322 support the rotatable component 321, allowing the rotatable component 321 to rotate relative to the fixed component 320 along the circumferential direction D1.

The two driving magnets 324 are disposed on the rotatable component 321 and located on opposite sides of the rotatable component 321.

The two coils 325 are disposed on and electrically connected to the printed circuit board 33, and the two coils 325 are disposed corresponding to the two driving magnets 324, respectively, for driving the rotatable component 321 to rotate, thereby driving the rotation of the rotatable blades 31 for adjusting the aperture size of the light pass aperture 310.

The two first magnetic elements 34 are fixed to the fixed component 320, and each of the first magnetic elements 34 includes an extension part 340 and a base part 341 that are connected to each other. The extension part 340 is arranged in a direction parallel to the optical axis OA, while the base part 341 is arranged in a direction perpendicular to the optical axis OA. A junction between the base part 341 and the extension part 340 includes a bend (its reference numeral is omitted). The first magnetic elements 34 are configured to interact with the driving magnets 324 disposed on the rotatable component 321, maintaining the light pass aperture 310 in an enlarged state (the detailed operation will be explained later). Further, the extension parts 340 of the first magnetic elements 34 are disposed adjacently corresponding to the driving magnets 324 along the circumferential direction D1, and the base parts 341 of the first magnetic elements 34 are disposed corresponding to the driving magnets 324 in the direction parallel to the optical axis OA. This arrangement allows the extension parts 340 and the driving magnets 324 to interact, maintaining the light pass aperture 310 in the enlarged state, and a preload force is generated between the base parts 341 and the driving magnets 324 in the direction parallel to the optical axis OA, ensuring the operation of the rotatable component 321 relative to the fixed component 320. In this embodiment, the first magnetic elements 34 are embedded within the fixed component 320.

The attractive force mechanism provides an attractive force AF exerted between the rotatable component 321 and the fixed component 320, and the attractive force AF includes a magnetic force exerted by the rotatable component 321 on the first magnetic element 34. Moreover, the attractive force mechanism provides a driving force exerted on the rotatable blades 31 for maintaining the light pass aperture 310 in an enlarged state. In this embodiment, the magnetic force of the rotatable component 321 is exerted between the extension parts 340 of the first magnetic elements 34 and the driving magnets 324. Specifically, as shown in Fig. 46 and Fig. 47, the driving magnets 324 disposed on the rotatable component 321 correspond to the first magnetic element 34 disposed on the fixed component 320. The magnetic force generated between the driving magnets 324 and the extension parts 340 makes the driving magnets 324 constantly subjected to the attractive force AF towards the extension parts 340, which enables the rotation of the rotatable component 321 relative to the fixed component 320 even when the optical lens module is not powered (e.g., when no current is passing through the coils 325), thereby providing the driving force to rotate the rotatable blade 31 in a direction that maintains the light pass aperture 310 in the enlarged state.

It is particularly noted that in this embodiment (the 3rd embodiment), the extension parts 340 of the first magnetic elements 34 serve the same function and effect as the first magnetic elements 14 in the 1st embodiment. Moreover, the base parts 341 of the first magnetic elements 34 in the 3rd embodiment serve the same function and effect as the second magnetic elements 15 in the 1st embodiment. Consequently, the first magnetic elements 34 in the 3rd embodiment can be regarded as integrally formed by the first magnetic elements 14 and the second magnetic elements 15 of the 1st embodiment.

When a maximum field of view of the optical lens module is FOV, the following condition is satisfied: 50 degrees $\leq$ FOV $\leq$ 105 degrees. When an f-number of the optical lens module is FNO, the following condition is satisfied: $0.9 \leq$ FNO $\leq 5.6$.

### 4th Embodiment

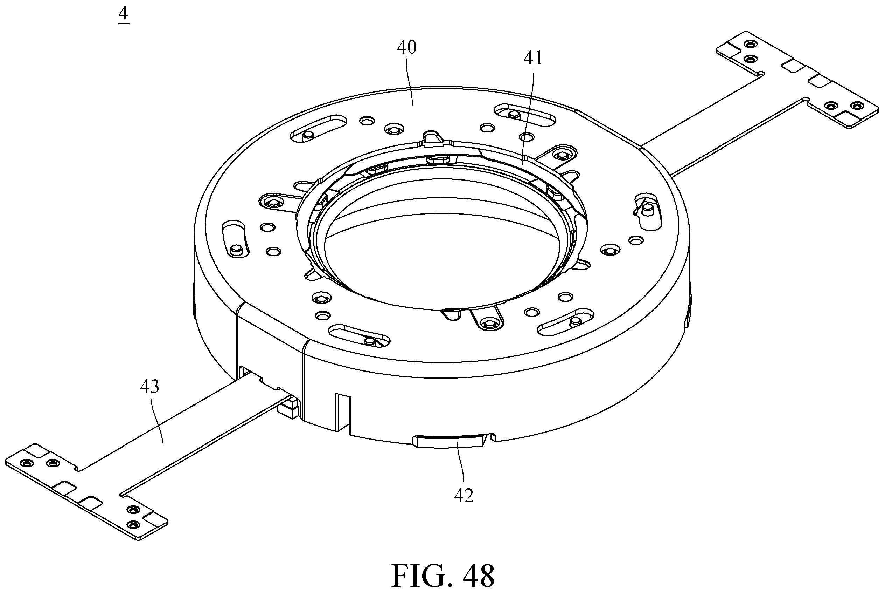

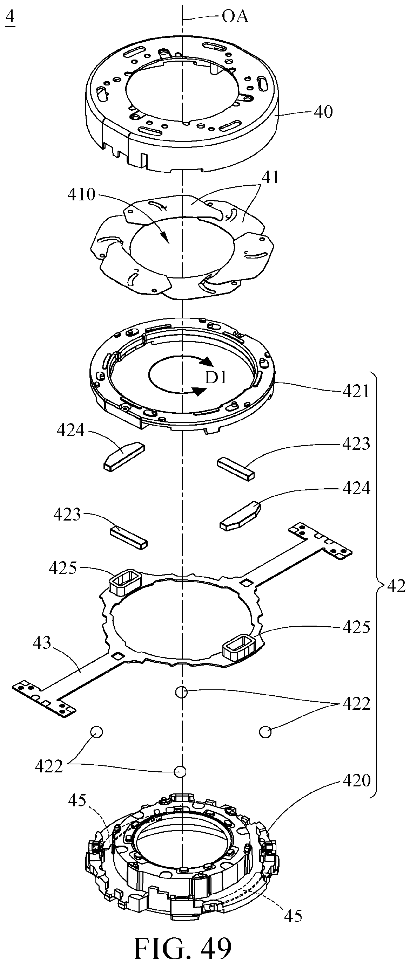

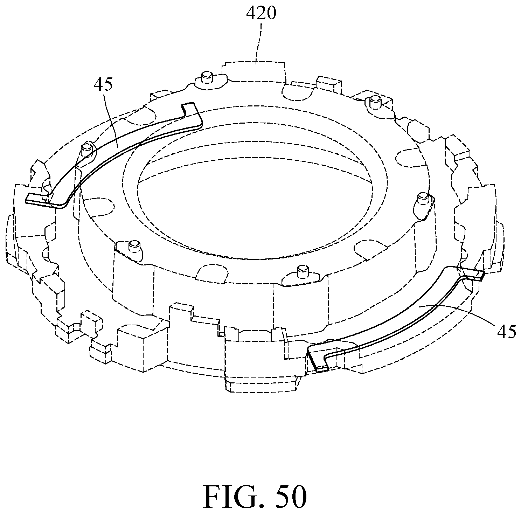

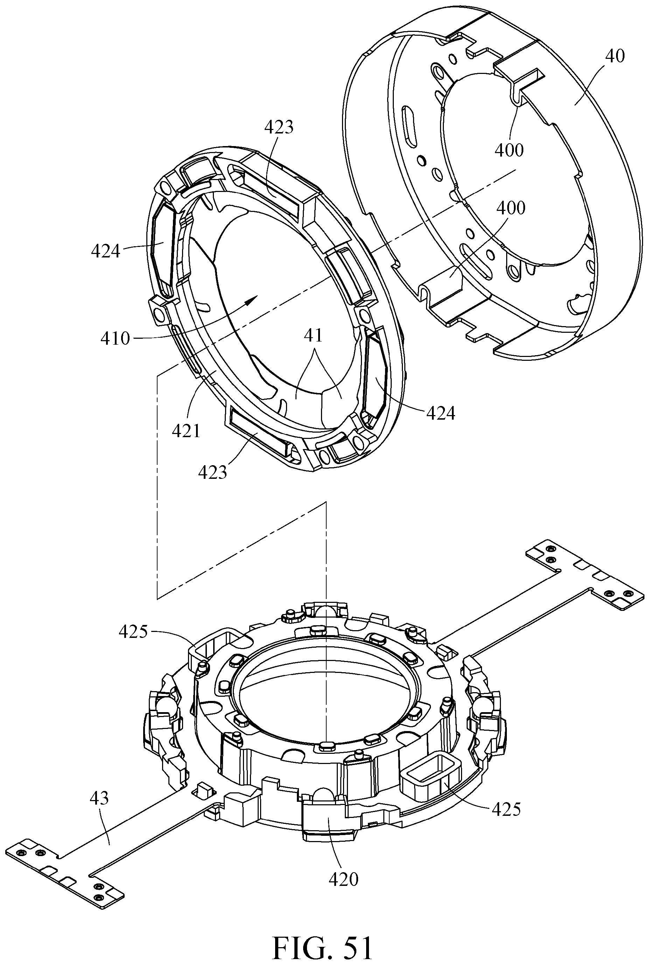

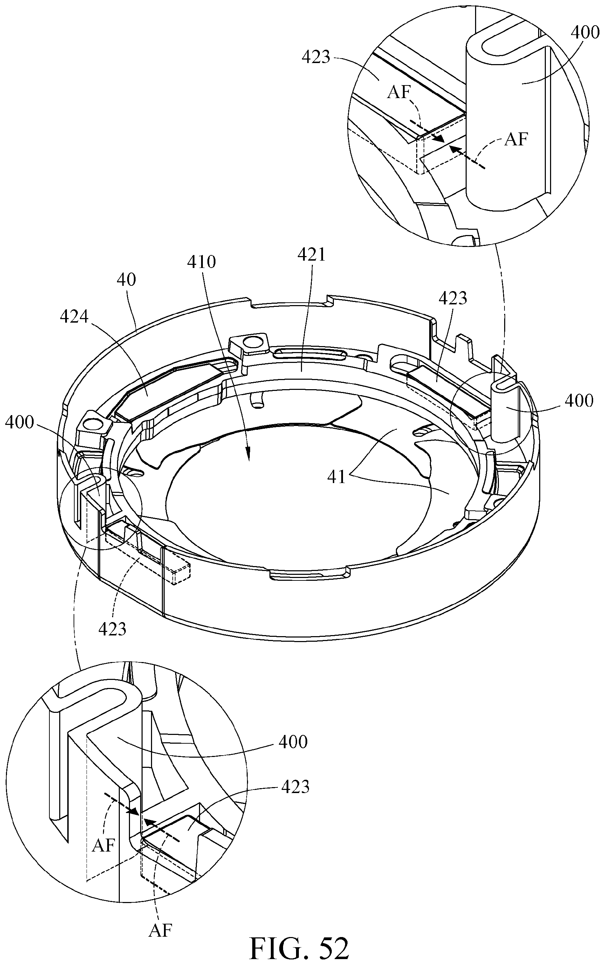

Fig. 48 is a perspective view of an adjustable aperture assembly of an optical lens module according to the 4th embodiment of the present disclosure, Fig. 49 is an exploded view of the adjustable aperture assembly in Fig. 48, Fig. 50 is a schematic view for showing the relative positions of second magnetic elements embedded within a fixed component in Fig. 49, Fig. 51 is a partially exploded view of the adjustable aperture assembly in Fig. 48, and Fig. 52 is a schematic view illustrating the operation of an attractive force mechanism of the adjustable aperture assembly in Fig. 48.

The optical lens module (its reference numeral is omitted) includes at least one lens element (its reference numeral is omitted) and an adjustable aperture assembly 4, and the adjustable aperture assembly 4 is disposed corresponding to the lens element.

The adjustable aperture assembly 4 includes an upper cover 40, a plurality of rotatable blades 41, a driving part 42, a printed circuit board 43, two second magnetic elements 45 and an attractive force mechanism. Moreover, the rotatable blades 41 are arranged around an optical axis OA of the lens element and collectively form a light pass aperture 410, and the optical axis OA passes through the light pass aperture 410.

The upper cover 40 is disposed on the driving part 42, the upper cover 40 and the driving part 42 collectively form an inner space (its reference numeral is omitted) therebetween, and the rotatable blades 41 are disposed in the inner space. Additionally, the printed circuit board 43 is disposed corresponding to and electrically connected to the driving part 42. Specifically, the driving part 42 includes a fixed component 420, a rotatable component 421, four bearing elements 422, two rotor magnets 423, two driving magnets 424, and two coils 425. Moreover, the upper cover 40 is fixed to the fixed component 420, and the inner space is formed between the upper cover 40 and the fixed component 420 for the rotatable blades 41 to be disposed therein. Furthermore, the printed circuit board 43 is attached to the fixed component 420.

The fixed component 420 and the rotatable component 421 are disposed corresponding to each other, and the rotatable component 421 has a rotational degree of freedom along a circumferential direction D1 around and perpendicular to the optical axis OA relative to the fixed component 420. Additionally, the rotatable component 421 is disposed corresponding to the rotatable blades 41, and the rotatable component 421 is configured to drive the rotatable blades 41 to rotate for adjusting an aperture size of the light pass aperture 410. It should be understood that the upper cover 40, the rotatable component 421, and the fixed component 420 all have openings disposed corresponding to the light pass aperture 410 of the rotatable blades 41, allowing light to travel through these openings and the light pass aperture 410.

The bearing elements 422 are disposed between the rotatable component 421 and the fixed component 420 and arranged around the optical axis OA. The bearing elements 422 support the rotatable component 421, allowing the rotatable component 421 to rotate relative to the fixed component 420 along the circumferential direction D1.

The two rotor magnets 423 are disposed on the rotatable component 421 and located on opposite sides of the rotatable component 421. The two driving magnets 424 are disposed on the rotatable component 421 and located on opposite sides of the rotatable component 421. In this embodiment, the two rotor magnets 423 and the two driving magnets 424 are alternatively arranged along the circumferential direction D1 that is perpendicular and surrounds the optical axis OA.

The two coils 425 are disposed on and electrically connected to the printed circuit board 43, and the two coils 425 are disposed corresponding to the two driving magnets 424, respectively, for driving the rotatable component 421 to rotate, thereby driving the rotation of the rotatable blades 41 for adjusting the aperture size of the light pass aperture 410.

In this embodiment, the upper cover 40 is a magnetic component (having the same or similar functions and effects as those of the first magnetic element(s) as described above), and the upper cover 40 has two protruding parts 400 on its inner wall. As shown in Fig. 51 and Fig. 52, the two protruding parts 400 are respectively and adjacently disposed corresponding to the two rotor magnets 423 disposed on the rotatable component 421 in the circumferential direction D1. The protruding parts 400 are configured to interact with the rotor magnets 423 for maintaining the light pass aperture 410 in an enlarged state (the detailed operation will be explained later).

The two second magnetic elements 45 are fixed to the fixed component 420, and the second magnetic elements 45 are respectively disposed corresponding to the two driving magnets 424 so as to generate a preload force between the second magnetic elements 45 and the driving magnets 424, ensuring the operation of the rotatable component 421 relative to the fixed component 420. In this embodiment, the second magnetic elements 45 are embedded within the fixed component 420.

The attractive force mechanism provides an attractive force AF exerted between the rotatable component 421 and the fixed component 420, and the attractive force AF includes a magnetic force exerted by the rotatable component 421 on the protruding parts 400 of the upper cover 40. Additionally, the attractive force mechanism provides a driving force exerted on the rotatable blades 41 for maintaining the light pass aperture 410 in the enlarged state. In this embodiment, the magnetic force of the rotatable component 421 is exerted between the protruding parts 400 of the upper cover 40 and the rotor magnets 423. Specifically, as shown in Fig. 51 and Fig. 52, the rotor magnets 423 disposed on the rotatable component 421 correspond to the protruding parts 400 of the upper cover 40. The magnetic force generated between the rotor magnets 423 and the protruding parts 400 makes the rotor magnets 423 constantly subjected to the attractive force AF towards the protruding parts 400, which enables the rotation of the rotatable component 421 relative to the upper cover 40 and the fixed component 420 even when the optical lens module is not powered (e.g., when no current is passing through the coils 425), thereby providing the driving force to rotate the rotatable blades 41 in a direction that maintains the light pass aperture 410 in the enlarged state.

When a maximum field of view of the optical lens module is FOV, the following condition is satisfied: 50 degrees $\leq$ FOV $\leq$ 105 degrees. When an f-number of the optical lens module is FNO, the following condition is satisfied: $0.9 \leq$ FNO $\leq 5.6$.

## 5th Embodiment

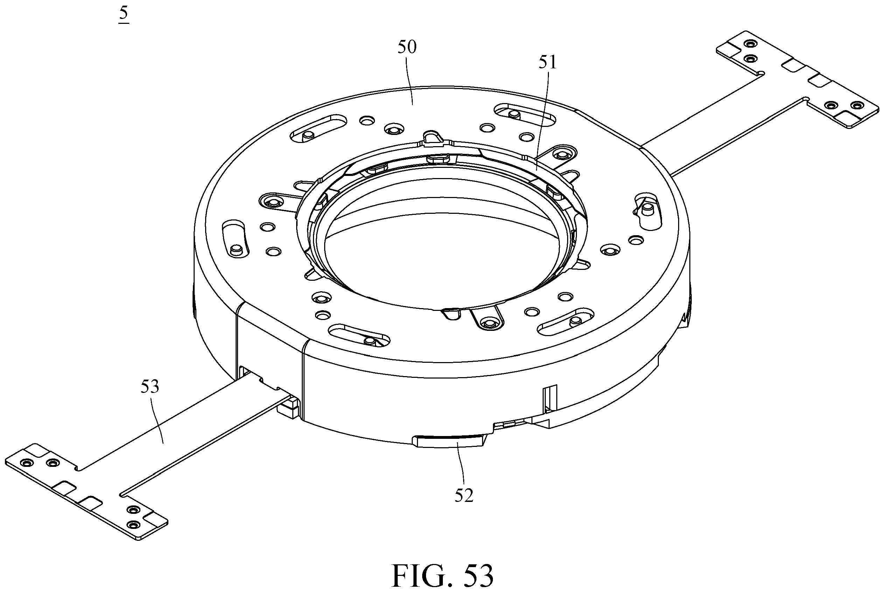

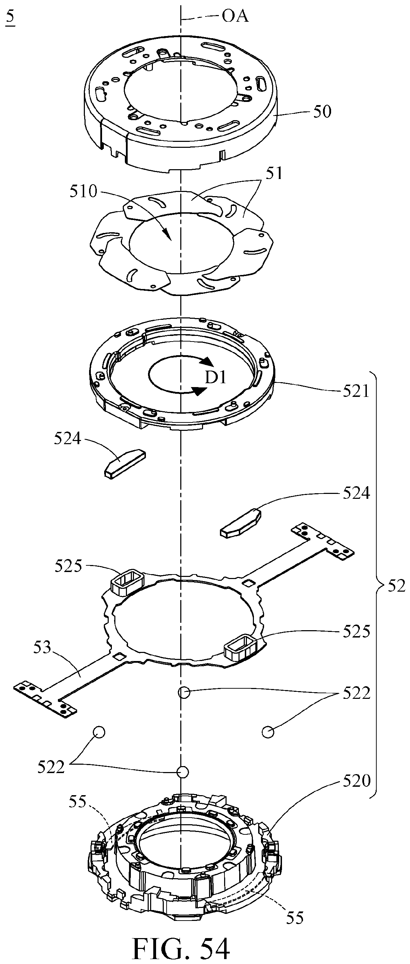

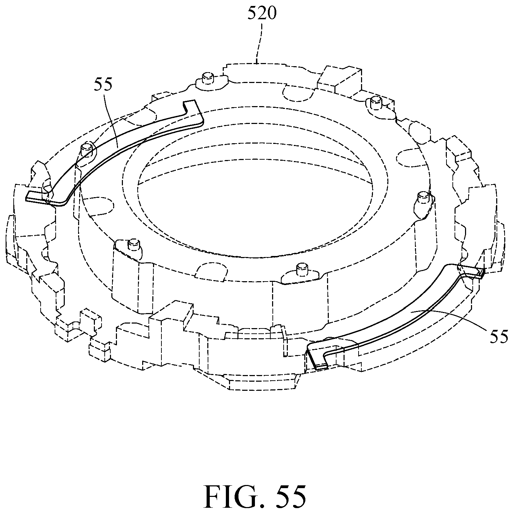

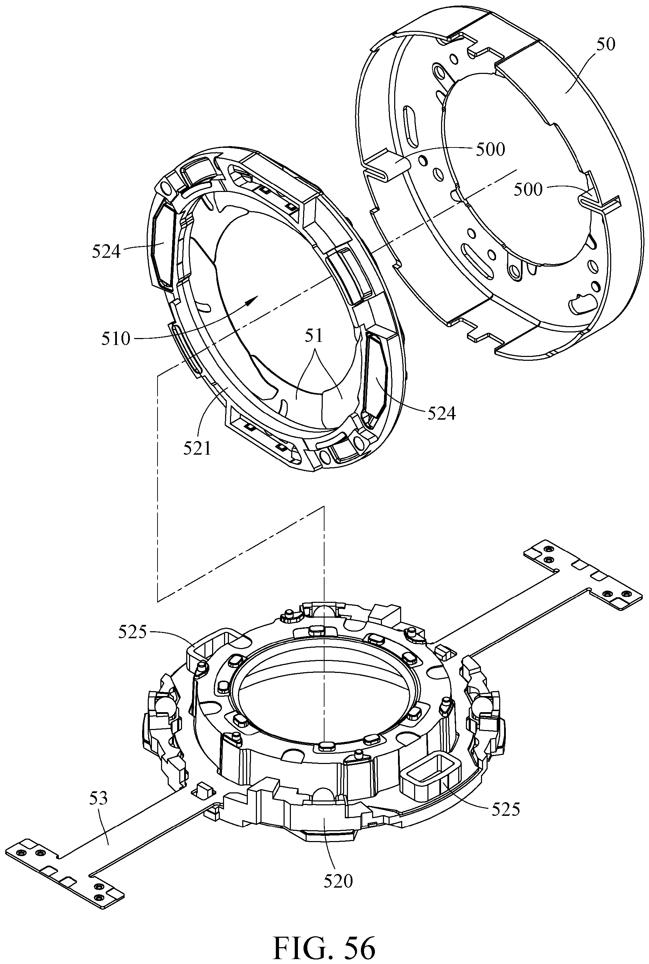

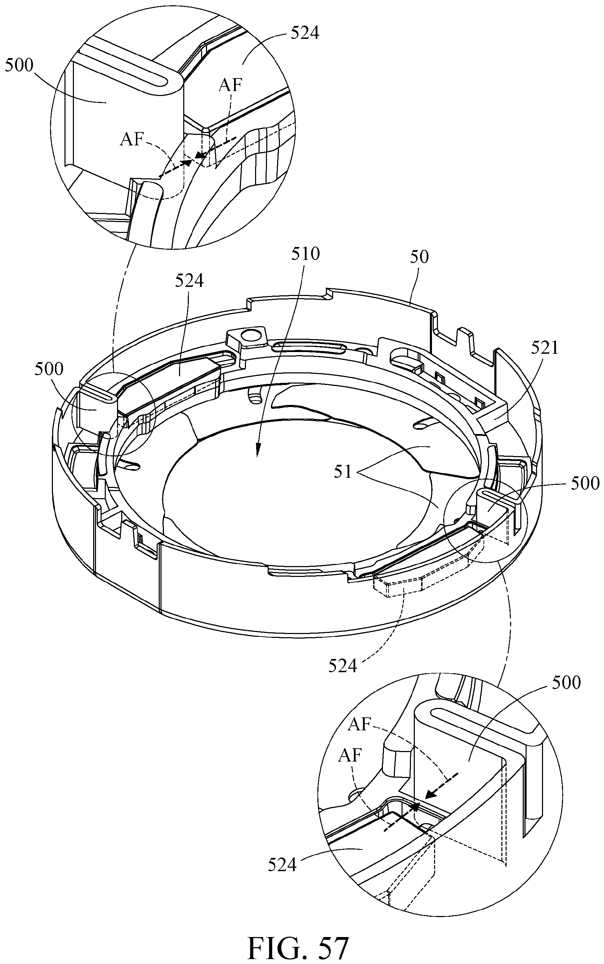

Fig. 53 is a perspective view of an adjustable aperture assembly of an optical lens module according to the 5th embodiment of the present disclosure, Fig. 54 is an exploded view of the adjustable aperture assembly in Fig. 53, Fig. 55 is a schematic view for showing the relative positions of second magnetic elements embedded within a fixed component in Fig. 54, Fig. 56 is a partially exploded view of the adjustable aperture assembly in Fig. 53, and Fig. 57 is a schematic view illustrating the operation of an attractive force mechanism of the adjustable aperture assembly in Fig. 53.

The optical lens module (its reference numeral is omitted) includes at least one lens element (its reference numeral is omitted) and an adjustable aperture assembly 5, and the adjustable aperture assembly 5 is disposed corresponding to the lens element.

The adjustable aperture assembly 5 includes an upper cover 50, a plurality of rotatable blades 51, a driving part 52, a printed circuit board 53, two second magnetic elements 55 and an attractive force mechanism. Moreover, the rotatable blades 51 are arranged around an optical axis OA of the lens element and collectively form a light pass aperture 510, and the optical axis OA passes through the light pass aperture 510.

The upper cover 50 is disposed on the driving part 52, the upper cover 50 and the driving part 52 collectively form an inner space (its reference numeral is omitted) therebetween, and the rotatable blades 51 are disposed in the inner space. Furthermore, the printed circuit board 53 is disposed corresponding to and electrically connected to the driving part 52. Specifically, the driving part 52 includes a fixed component 520, a rotatable component 521, four bearing elements 522, two driving magnets 524, and two coils 525. Moreover, the upper cover 50 is fixed to the fixed component 520, and the inner space is formed between the upper cover 50 and the fixed component 520 for the rotatable blades 51 to be disposed therein. Furthermore, the printed circuit board 53 is attached to the fixed component 520.

The fixed component 520 and the rotatable component 521 are disposed corresponding to each other, and the rotatable component 521 has a rotational degree of freedom along a circumferential direction D1 around and perpendicular to the optical axis OA relative to the fixed component 520. Moreover, the rotatable component 521 is disposed corresponding to the rotatable blades 51, and the rotatable component 521 is configured to drive the rotatable blades 51 to rotate for adjusting an aperture size of the light pass aperture 510. It should be understood that the upper cover 50, the rotatable component 521, and the fixed component 520 all have openings disposed corresponding to the light pass aperture 510 of the rotatable blades 51, allowing light to travel through these openings and the light pass aperture 510.

The bearing elements 522 are disposed between the rotatable component 521 and the fixed component 520 and arranged around the optical axis OA. The bearing elements 522 support the rotatable component 521, allowing the rotatable component 521 to rotate relative to the fixed component 520 along the circumferential direction D1.

The two driving magnets 524 are disposed on the rotatable component 521 and respectively located on opposite sides of the rotatable component 521.

The two coils 525 are disposed on and electrically connected to the printed circuit board 53, and the two coils 525 are disposed corresponding to the two driving magnets 524, respectively, for driving the rotatable component 521 to rotate, thereby driving the rotation of the rotatable blades 51 for adjusting the aperture size of the light pass aperture 510.

In this embodiment, the upper cover 50 is a magnetic component (having the same or similar functions and effects as those of the first magnetic element(s) as described above), and the upper cover 50 has two protruding parts 500 on its inner wall. As shown in Fig. 56 and Fig. 57, the two protruding parts 500 are respectively and adjacently disposed corresponding to the two driving magnets 524 disposed on the rotatable component 521 in the circumferential direction D1. The protruding parts 500 are configured to interact with the driving magnets 524 for maintaining the light pass aperture 510 in an enlarged state (detailed operation will be explained later).

The two second magnetic elements 55 are fixed to the fixed component 520, and the two second magnetic elements 55 are respectively disposed corresponding to the two driving magnets 524 so as to generate a preload force between the second magnetic elements 55 and the driving magnets 524, maintaining the operation of the rotatable component 521 relative to the fixed component 520. In this embodiment, the second magnetic elements 55 are embedded within the fixed component 520.

The attractive force mechanism provides an attractive force AF exerted between the rotatable component 521 and the fixed component 520, and the attractive force AF includes a magnetic force exerted by the rotatable component 521 on the protruding parts 500 of the upper cover 50. Additionally, the attractive force mechanism provides a driving force exerted on the rotatable blades 51 to maintain the light pass aperture 510 in the enlarged state. In this embodiment, the magnetic force of the rotatable component 521 is exerted between the protruding parts 500 of the upper cover 50 and the driving magnets 524. Specifically, as shown in Fig. 56 and Fig. 57, the driving magnets 524 disposed on the rotatable component 521 correspond to the protruding parts 500 of the upper cover 50. The magnetic force generated between the driving magnets 524 and the protruding parts 500 makes the driving magnets 524 constantly subjected to the attractive force AF towards the protruding parts 500, which enables the rotation of the rotatable component 521 relative to the upper cover 50 and the fixed component 520 even when the optical lens module is not powered (e.g., when no current is passing through the coils 525), thereby providing the driving force to rotate the rotatable blades 51 in a direction that maintains the light pass aperture 510 in the enlarged state.

When a maximum field of view of the optical lens module is FOV, the following condition is satisfied: 50 degrees $\leq$ FOV $\leq$ 105 degrees. When an f-number of the optical lens module is FNO, the following condition is satisfied: 0.9 $\leq$ FNO $\leq$ 5.6.

## 5th Embodiment

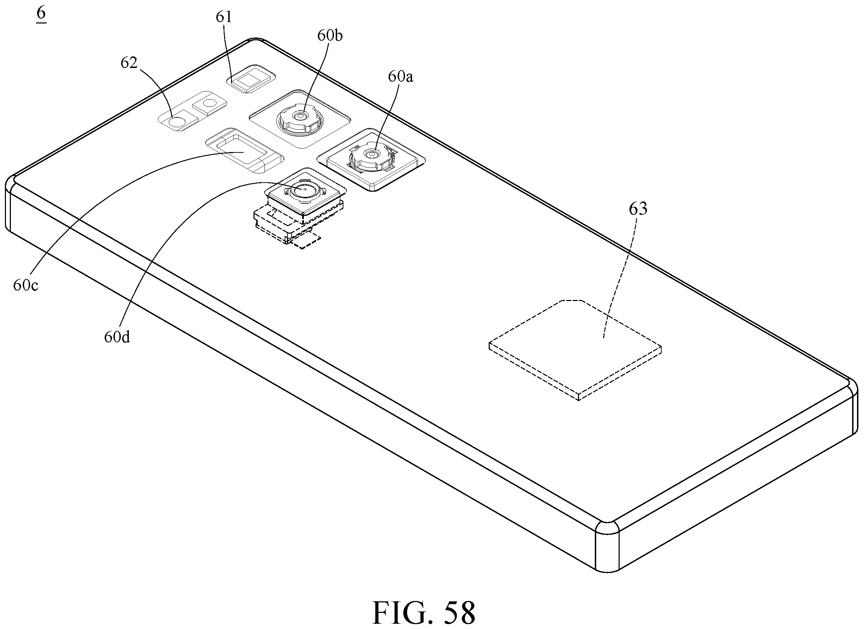

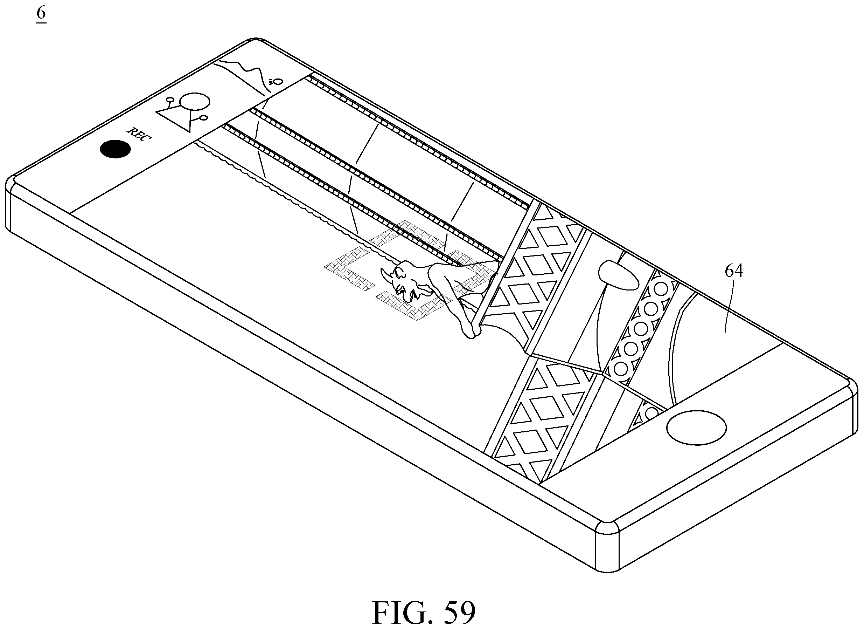

Please refer to Fig. 58 and Fig. 59. Fig. 58 is one perspective view of an electronic device according to the 6th embodiment of the present disclosure, and Fig. 59 is another perspective view of the electronic device in Fig. 58.

In this embodiment, the electronic device 6 is a smartphone including a plurality of camera modules, a flash module 61, a focus assist module 62, an image signal processor 63, a display module (user interface) 64 and an image software processor (not shown).

These camera modules include an ultra-wide-angle camera module 60a, a high pixel camera module 60b, a telephoto camera module 60c and a telephoto camera module 60d. Moreover, the camera module 60a includes, for example, the optical lens module as disclosed in the 1st embodiment of the present disclosure and an image sensor (not shown), and the image sensor is disposed on an image surface of the optical lens module. The camera modules 60a, 60b and 60c can also include the optical lens module of the present disclosure, and the present disclosure is not limited thereto.

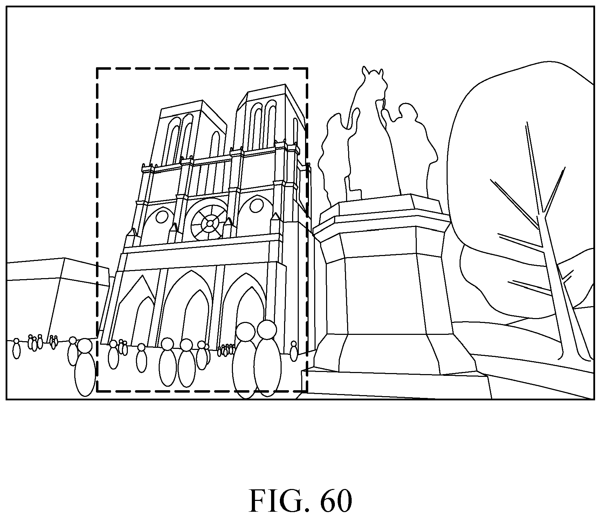

The image captured by the ultra-wide-angle camera module 60a enjoys a feature of multiple imaged objects. Fig. 60 is an illustration of an image captured by the ultra-wide-angle camera module 60a.

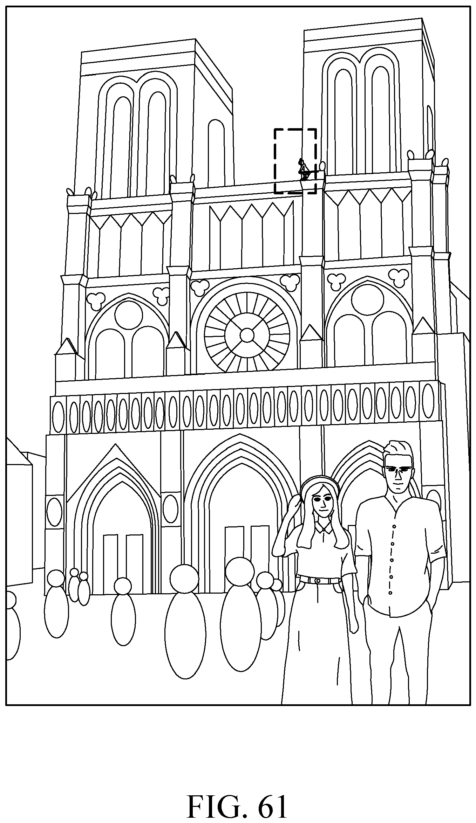

The image captured by the high pixel camera module 60b enjoys a feature of high resolution and less distortion, and the high pixel camera module 60b can capture part of the image in Fig. 60. Fig. 61 is an illustration of an image captured by the high pixel camera module 60b.

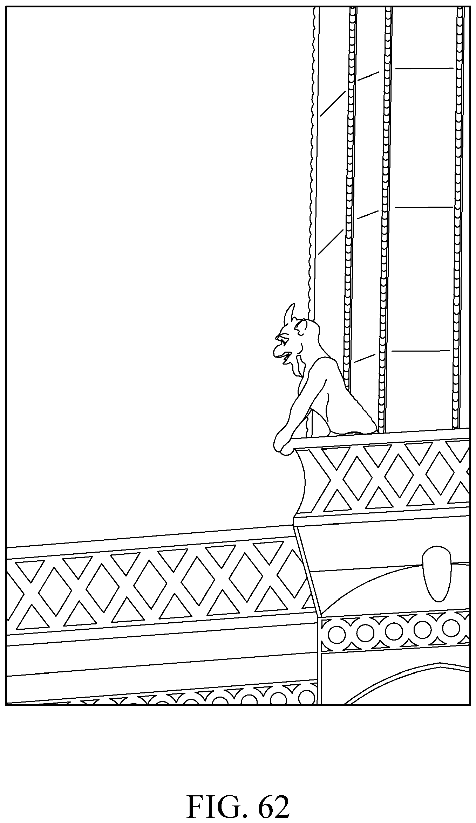

The image captured by the telephoto camera module 60c or 60d enjoys a feature of high optical magnification, and the telephoto camera module 60c or 60d can capture part of the image in Fig. 61. Fig. 62 is an illustration of an image captured by the telephoto camera module 60c or 60d. Moreover, the maximum field of view of the camera module corresponds to the field of view in Fig. 62.

When a user captures images of an object, the light rays converge in the ultra-wide-angle camera module 60a, the high pixel camera module 60b, the telephoto camera module 60c or the telephoto camera module 60d to generate images, and the flash module 61 is activated for light supplement. The focus assist module 62 detects the object distance of the imaged object to achieve fast auto focusing. The image signal processor 63 is configured to optimize the captured image to improve image quality and provided zooming function. The light beam emitted from the focus assist module 62 can be either conventional infrared or laser. The display module 64 can include a touch screen, and the user is able to interact with the display module 64 to adjust the angle of view and switch between different camera modules, and the image software processor having multiple functions to capture images and complete image processing. Alternatively, the user may capture images via a physical button. The image processed by the image software processor can be displayed on the display module 64.

## 7th Embodiment

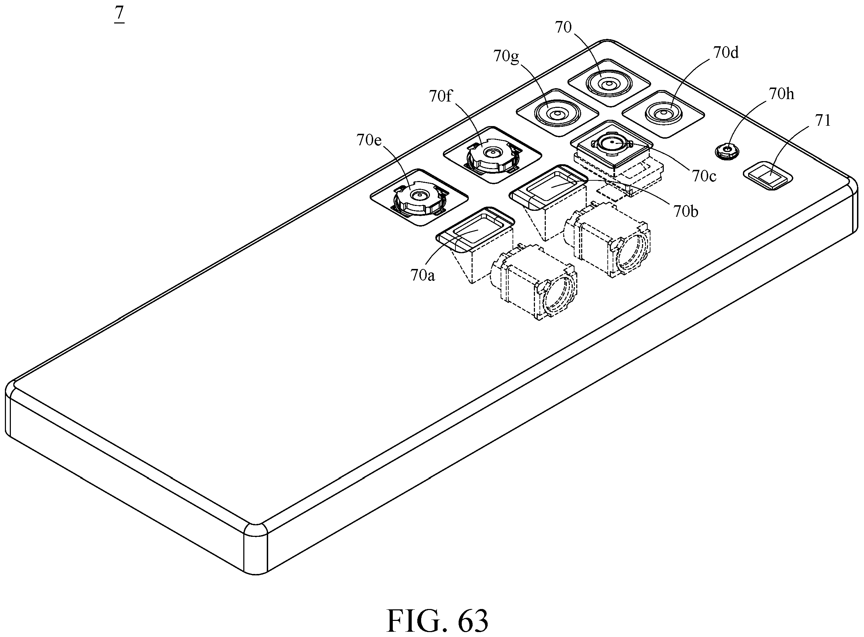

Please refer to Fig. 63, which is a perspective view of an electronic device according to the 7th embodiment of the present disclosure.

In this embodiment, the electronic device 7 is a smartphone including a camera module 70, a camera module 70a, a camera module 70b, a camera module 70c, a camera module 70d, a camera module 70e, a camera module 70f, a camera module 70g, a camera module 70h, a flash module 71, an image signal processor, a display module, and an image software processor (not shown). The camera module 70, the camera module 70a, the camera module 70b, the camera module 70c, the camera module 70d, the camera module 70e, the camera module 70f, the camera module 70g, and the camera module 70h are disposed on the same side of the electronic device 7, while the display module is disposed on the opposite side of the electronic device 7. Moreover, the camera module 70c includes, for example, the optical lens module as disclosed in the 1st embodiment of the present disclosure and an image sensor (not shown), and the image sensor is disposed on an image surface of the optical lens module. The camera modules 70, 70a, 70b, 70d, 70e, 70f, 70g and 70h can also include the optical lens module of the present disclosure, and the present disclosure is not limited thereto.

The camera module 70 is an ultra-wide-angle camera module, the camera module 70a is a telephoto camera module, the camera module 70b is a telephoto camera module, the camera module 70c is a telephoto camera module, the camera module 70d is a telephoto camera module, the camera module 70e is a wide-angle camera module, the camera module 70f is a wide-angle camera module, the camera module 70g is an ultra-wide-angle camera module, and the camera module 70h is a ToF (time of flight) camera module. In this embodiment, the camera module 70, the camera module 70a, the camera module 70b, the camera module 70c, the camera module 70d, the camera module 70e, the camera module 70f and the camera module 70g have different fields of view, such that the electronic device 7 can have various magnification ratios so as to meet the requirement of optical zoom functionality. In addition, the camera module 70a and the camera module 70b are telephoto camera modules each having a light-folding element configuration. In addition, the camera module 70h can determine depth information of the imaged object. In this embodiment, the electronic device 7 includes multiple camera modules 70, 70a, 70b, 70c, 70d, 70e, 70f, 70g, and 70h, but the present disclosure is not limited to the number and arrangement of camera modules. When a user captures images of an object, the light rays converge in the camera module 70, the camera module 70a, the camera module 70b, the camera module 70c, the camera module 70d, the camera module 70e, the camera module 70f, the camera module 70g or the camera module 70h to generate an image(s), and the flash module 71 is activated for light supplement. Further, the subsequent processes are performed in a manner similar to the abovementioned embodiments, so the details in this regard will not be provided again.

## 8th Embodiment

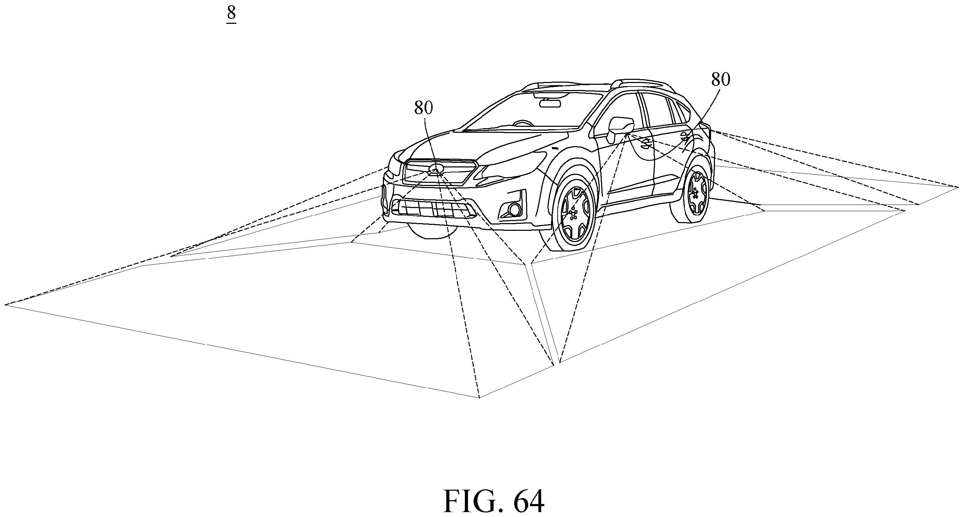

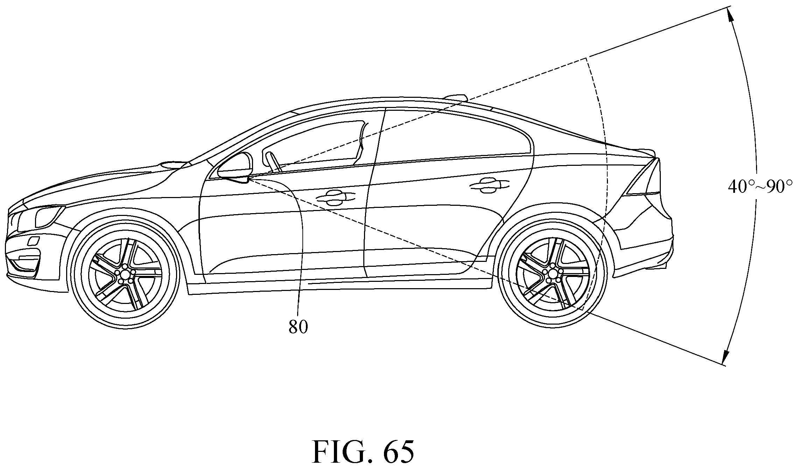

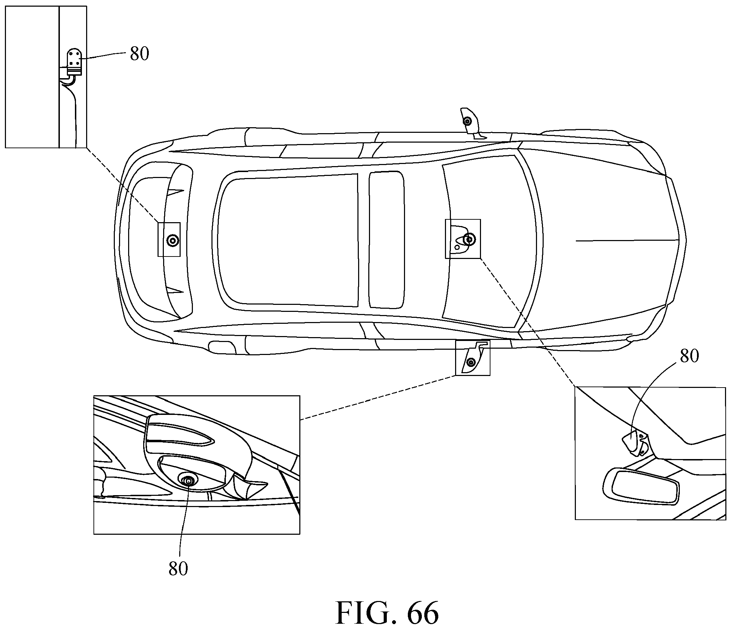

Please refer to Fig. 64 to Fig. 66. Fig. 64 is a perspective view of an electronic device according to the 8th embodiment of the present disclosure, Fig. 65 is a side view of the electronic device in Fig. 64, and Fig. 66 is a top view of the electronic device in Fig. 64.

In this embodiment, the electronic device 8 is an automobile. The electronic device 8 includes a plurality of automotive camera modules 80, and the camera modules 80 include the optical lens module of the present disclosure. The camera modules 80 can serve as, for example, panoramic view car cameras, dashboard cameras and vehicle backup cameras.

As shown in Fig. 64, the camera modules 80 are, for example, disposed around the automobile to capture peripheral images of the automobile, which is favorable for obtaining external traffic information so as to achieve autopilot function. In addition, the image software processor may blend the peripheral images into one panoramic view image for the driver's checking every corner surrounding the automobile, thereby favorable for parking and driving.

As shown in Fig. 65, the camera modules 80 are, for example, respectively disposed on the lower portion of the side mirrors. A maximum field of view of each of the camera modules 80 can be 40 degrees to 90 degrees for capturing images in regions on left and right lanes.

As shown in Fig. 66, the camera modules 80 can also be, for example, respectively disposed on the lower portion of the side mirrors and inside the front and rear windshields for providing external information to the driver, and also providing more viewing angles so as to reduce blind spots, thereby improving driving safety.

The smartphones, panoramic view car cameras, dashboard cameras and vehicle backup cameras in the embodiments are only exemplary for showing the adjustable aperture assembly, the optical lens module and the camera module of the present disclosure installed in an electronic device, and the present disclosure is not limited thereto. The adjustable aperture assembly, the optical lens module and the camera module can be optionally applied to optical systems with a movable focus. Furthermore, the adjustable aperture assembly, the optical lens module and the camera module feature good capability in aberration corrections and high image quality, and can be applied to 3D (three-dimensional) image capturing applications, in products such as digital cameras, mobile devices, digital tablets, smart televisions, network surveillance devices, multi-camera devices, image recognition systems, motion sensing input devices, wearable devices and other electronic imaging devices.

The foregoing description, for the purpose of explanation, has been described with reference to specific embodiments. It is to be noted that the present disclosure shows different data of the different embodiments; however, the data of the different embodiments are obtained from experiments. The embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the present disclosure to the precise forms disclosed. Many modifications and variations are possible in view of the above teachings.

**Claims**

1. An optical lens module (9) comprising:

   at least one lens element (90); and
   an adjustable aperture assembly (1) disposed corresponding to the at least one lens element (90), and the adjustable aperture assembly (1) comprising:

   a plurality of rotatable blades (11) rotatably arranged around an optical axis (OA) of the at least one lens element (90) and collectively forming a light pass aperture (110), and the optical axis (OA) passing through the light pass aperture (110);
   a driving part (12) comprising:

   a rotatable component (121) disposed corresponding to the plurality of rotatable blades (11), and the rotatable component (121) configured to drive the plurality of rotatable blades (11) to rotate for adjusting an aperture size of the light pass aperture (110);
   a fixed component (120) disposed corresponding to the rotatable component (121), and the rotatable component (121) having a rotational degree of freedom along a circumferential direction (D1) around and perpendicular to the optical axis (OA) relative to the fixed component (120);
   at least one driving magnet (124) disposed on the rotatable component (121); and
   at least one coil (125) disposed corresponding to the at least one driving magnet (124) for driving the rotatable component (121) to rotate; and

   an attractive force mechanism providing an attractive force (AF) exerted between the rotatable component (121) and the fixed component (120), and the attractive force (AF) comprising a magnetic force exerted by the rotatable component (121) on a first magnetic element (14) fixed on the fixed component (120);

   wherein the attractive force mechanism provides a driving force exerted on the plurality of rotatable blades (11) for maintaining the light pass aperture (110) in an enlarged state.

2. The optical lens module (9) of claim 1, wherein the first magnetic element (14) comprises:

   an extension part (140) arranged along a direction parallel to the optical axis (OA); and
   a base part (141) connected to the extension part (140) and arranged along a direction perpendicular to the optical axis (OA), and a junction between the base part (141) and the extension part (140) comprising a bend (TR).

3. The optical lens module (9) of claim 2, wherein the extension part (140a) comprises an elastic section (1400a), a height of the extension part (140a) is HE, a height of the elastic section (1400a) is HS, and the following condition is satisfied:

$$0 \leq HS/HE \leq 1.$$

4. The optical lens module (9) of claim 2, wherein the first magnetic element (14e) further comprises:
a buffer part (142e) disposed on the extension part (140e).

5. The optical lens module (9) of claim 2, wherein the adjustable aperture assembly (1) further comprises:
at least one second magnetic element (15) disposed corresponding to the at least one driving magnet (124).

6. The optical lens module (9) of claim 5, wherein the first magnetic element (34) and the at least one second magnetic element (34) are formed of a single piece.

7. The optical lens module (9) of claim 1, wherein the driving part (12) further comprises:
at least two bearing elements (122) arranged around the optical axis (OA), the at least two bearing elements (122) disposed between the rotatable component (121) and the fixed component (120), and the at least two bearing elements (122) supporting the rotatable component (121), such that the rotatable component (121) is rotatable relative to the fixed component (120) along the circumferential direction (D1).

8. The optical lens module (9) of claim 7, wherein a height of the first magnetic element (14) is HM, a height of each of the at least two bearing elements (122) is HB, and the following condition is satisfied:

$$0.1 \leq HB/HM \leq 1.$$

9. The optical lens module (9) of claim 1, wherein the adjustable aperture assembly (1) further comprises:
an upper cover (10) fixed to the fixed component (120), an inner space (S) formed between the upper cover (10) and the fixed component (120), and the plurality of rotatable blades (11) disposed in the inner space (S).

10. The optical lens module (9) of claim 9, wherein the upper cover (40) is the first magnetic element.

11. The optical lens module (9) of claim 1, wherein the at least one driving magnet (124f) is disposed corresponding to the at least one coil (125f) in a direction perpendicular to the optical axis (OA).

12. The optical lens module (9) of claim 1, wherein the at least one driving magnet (124) is disposed corresponding to the at least one coil (125) in a direction parallel to the optical axis (OA).

13. The optical lens module (9) of claim 1, wherein the magnetic force of the rotatable component (321) is exerted between the first magnetic element (34) and the at least one driving magnet (324).

14. The optical lens module (9) of claim 1, wherein the magnetic force of the rotatable component (121) is exerted between the first magnetic element (14) and a rotor magnet (123) of the rotatable component (121).

15. A camera module (60a) comprising:

the optical lens module (9) of claim 1; and
an image sensor disposed on an image surface of the optical lens module (9).

16. An electronic device (6) comprising:
the camera module (60a) of claim 15.

17. An optical lens module (9) comprising:

at least one lens element (90); and
an adjustable aperture assembly (2) disposed corresponding to the at least one lens element (90), and the adjustable aperture assembly (2) comprising:

a plurality of rotatable blades (21) rotatably arranged around an optical axis (OA) of the at least one lens element (90) and collectively forming a light pass aperture (210), and the optical axis (OA) passing through the light pass aperture (210);
a driving part (22) comprising:

a rotatable component (221) disposed corresponding to the plurality of rotatable blades (21), and the rotatable component (221) configured to drive the plurality of rotatable blades (21) to rotate for adjusting an aperture size of the light pass aperture (210);
a fixed component (220) disposed corresponding to the rotatable component (221), and the rotatable component (221) having a rotational degree of freedom along a circumferential direction (D1) around and perpendicular to the optical axis (OA) relative to the fixed component (220);
at least one driving magnet (224) disposed on the rotatable component (221); and
at least one coil (225) disposed corresponding to the at least one driving magnet (224) for driving the rotatable component (221) to rotate; and
a preload force mechanism providing an attractive force (AF) exerted between the rotatable component (221) and the fixed component (220), and the attractive force (AF) comprising a magnetic force exerted by the rotatable component (221) on a stator magnet (226) disposed on the fixed component (220);

wherein the preload force mechanism provides a driving force exerted on the plurality of rotatable blades (21) for maintaining the light pass aperture (210) in an enlarged state.

18. The optical lens module (9) of claim 17, wherein the driving part (22) further comprises:
at least two bearing elements (222) arranged around the optical axis (OA), the at least two bearing elements (222) disposed between the rotatable component (221) and the fixed component (220), and the at least two bearing elements (222) supporting the rotatable component (221), such that the rotatable component (221) is rotatable relative to the fixed component (220) along the circumferential direction (D1).

19. The optical lens module (9) of claim 17, wherein the adjustable aperture assembly (2) further comprises:
a printed circuit board (23) disposed corresponding to and electrically connected to the driving part (22).

20. The optical lens module (9) of claim 17, wherein the at least one driving magnet (124f) is disposed corresponding to the at least one coil (125f) in a direction perpendicular to the optical axis (OA).

21. The optical lens module (9) of claim 17, wherein the at least one driving magnet (224) is disposed corresponding to the at least one coil (225) in a direction parallel to the optical axis (OA).

22. The optical lens module (9) of claim 17, wherein the magnetic force of the rotatable component (221) is exerted between the stator magnet (226) and the at least one driving magnet (224).

23. The optical lens module (9) of claim 17, wherein the magnetic force of the rotatable component (221j) is exerted between the stator magnet (226j) and a rotor magnet (223j) disposed on the rotatable component (221j).

24. The optical lens module (9) of claim 17, wherein the magnetic force of the rotatable component (221m) is exerted between the stator magnet (226m) and a third magnetic element (26m) fixed to the rotatable component (221m).

25. The optical lens module (9) of claim 17, wherein a maximum field of view of the optical lens module (9) is FOV, and the following condition is satisfied: 50 degrees ≤ FOV ≤ 105 degrees.

26. The optical lens module (9) of claim 17, wherein an f-number of the optical lens module (9) is FNO, and the following condition is satisfied:

$$0.9 \leq FNO \leq 5.6.$$

27. An optical lens module (9) comprising:

at least one lens element (90); and
an adjustable aperture assembly (2h) disposed corresponding to the at least one lens element (90), and the adjustable aperture assembly (2h) comprising:

a plurality of rotatable blades (21h) rotatably arranged around an optical axis (OA) of the at least one lens element (90) and collectively forming a light pass aperture (210h), and the optical axis (OA) passing through the light pass aperture (210h);
a driving part (22) comprising:

a rotatable component (221h) disposed corresponding to the plurality of rotatable blades (21h), and the rotatable component (221h) configured to drive the plurality of rotatable blades (21h) to rotate for adjusting an aperture size of the light pass aperture (210h);
a fixed component (220h) disposed corresponding to the rotatable component (221h), and the rotatable component (221h) having a rotational degree of freedom along a circumferential direction (D1) around and perpendicular to the optical axis (OA) relative to the fixed component (220h);
at least one driving magnet (224h) disposed on the rotatable component (221h); and
at least one coil (225h) disposed corresponding to the at least one driving magnet (224h) for driving the rotatable component (221h) to rotate; and

a preload force mechanism providing a repulsive force (RF) exerted between the rotatable component (221h) and the fixed component (220h), and the repulsive force (RF) comprising a magnetic force exerted by the rotatable component (221h) on a stator magnet (226h) disposed on the fixed component (220h);

wherein the preload force mechanism provides a driving force exerted on the plurality of rotatable blades (21h) for maintaining the light pass aperture (210h) in an enlarged state.

28. The optical lens module (9) of claim 27, wherein the driving part (22) further comprises:

at least two bearing elements (222) arranged around the optical axis (OA), the at least two bearing elements (222) disposed between the rotatable component (221h) and the fixed component (220h), and the at least two bearing elements (222) supporting the rotatable component (221h), such that the rotatable component (221h) is rotatable relative to the fixed component (220h) along the circumferential direction (D1).

29. The optical lens module (9) of claim 27, wherein the adjustable aperture assembly (2h) further comprises:
a printed circuit board (23) disposed corresponding to and electrically connected to the driving part (22).

30. The optical lens module (9) of claim 27, wherein the magnetic force of the rotatable component (221h) is exerted between the stator magnet (226h) and the at least one driving magnet (224h).

31. The optical lens module (9) of claim 27, wherein the magnetic force of the rotatable component (221j) is exerted between the stator magnet (226j) and a rotor magnet (223j) disposed on the rotatable component (221j).

EP 4 530 715 A1

1

10 11

13

12

FIG. 1

FIG. 2

FIG. 3

FIG. 4

FIG. 5

FIG. 6

FIG. 7

EP 4 530 715 A1

FIG. 8

FIG. 9

FIG. 10

FIG. 11

FIG. 12

FIG. 13

FIG. 14

FIG. 15

FIG. 16

**FIG. 17**

**FIG. 18**

**FIG. 19**

**FIG. 20**

**FIG. 21**

**FIG. 22**

**FIG. 23**

**FIG. 24**

**FIG. 25**

FIG. 26

EP 4 530 715 A1

FIG. 27

EP 4 530 715 A1

FIG. 28

FIG. 29

FIG. 30

FIG. 31

FIG. 32

2h

FIG. 33

FIG. 34

2j

FIG. 35

FIG. 36

2k

FIG. 37

FIG. 38

2m

FIG. 39

FIG. 40

FIG. 41

FIG. 42

FIG. 43

FIG. 44

EP 4 530 715 A1

FIG. 45

51

324
321
310
31
324

325
325
33
34
320

FIG. 46

FIG. 47

FIG. 48

FIG. 49

FIG. 50

FIG. 51

FIG. 52

FIG. 53

FIG. 54

520

55

55

# FIG. 55

FIG. 56

FIG. 57

FIG. 58

FIG. 59

FIG. 60

FIG. 61

FIG. 62

FIG. 63

FIG. 64

40°~90°

80

FIG. 65

FIG. 66

Europäisches
Patentamt
European
Patent Office
Office européen
des brevets

# EUROPEAN SEARCH REPORT

| Application Number |
| --- |
| EP 24 17 7959 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | CN 114 726 977 A (HUAWEI TECH CO LTD) 8 July 2022 (2022-07-08) | 1,7,9, 11,13, 15-20, 22,25,26 | INV. G03B9/06 |
| A | * figures 8, 22 * | 2-6,8, 10,12, 14,21, 23,24, 27-31 | |
| | & EP 4 254 931 A1 (HUAWEI TECH CO LTD [CN]) 4 October 2023 (2023-10-04) * paragraphs [0025], [0109], [0111] * | | |
| X | US 2012/076486 A1 (BAI LONGJI [JP] ET AL) 29 March 2012 (2012-03-29) | 1,9,12, 13, 15-17, 19,21, 22,25,26 | |
| A | * paragraph [0047]; figure 1 * | 2-8,10, 11,14, 18,20, 23,24, 27-31 | |
| A | CN 219 552 740 U (LARGAN PRECISION CO LTD) 18 August 2023 (2023-08-18) * the whole document * | 1-31 | TECHNICAL FIELDS SEARCHED (IPC) |
| A | EP 4 235 295 A1 (LARGAN PRECISION CO LTD [TW]) 30 August 2023 (2023-08-30) * the whole document * | 1-31 | G03B |

The present search report has been drawn up for all claims

| Place of search | Date of completion of the search | Examiner |
| --- | --- | --- |
| Munich | 7 November 2024 | Marot-Lassauzaie, J |

EPO FORM 1503 03.82 (P04C01)

## ANNEX TO THE EUROPEAN SEARCH REPORT
## ON EUROPEAN PATENT APPLICATION NO.

EP 24 17 7959

07-11-2024

| Patent document cited in search report | | Publication date | Patent family member(s) | | Publication date |
|---|---|---|---|---|---|
| CN 114726977 | A | 08-07-2022 | CN | 114726977 A | 08-07-2022 |
| | | | CN | 115989679 A | 18-04-2023 |
| | | | CN | 118018827 A | 10-05-2024 |
| | | | EP | 4254931 A1 | 04-10-2023 |
| | | | US | 2024061317 A1 | 22-02-2024 |
| | | | WO | 2022143135 A1 | 07-07-2022 |
| US 2012076486 | A1 | 29-03-2012 | CN | 102419504 A | 18-04-2012 |
| | | | JP | 5604246 B2 | 08-10-2014 |
| | | | JP | 2012073383 A | 12-04-2012 |
| | | | KR | 20120032433 A | 05-04-2012 |
| | | | TW | 201214019 A | 01-04-2012 |
| | | | US | 2012076486 A1 | 29-03-2012 |
| CN 219552740 | U | 18-08-2023 | CN | 118363131 A | 19-07-2024 |
| | | | CN | 219552740 U | 18-08-2023 |
| | | | EP | 4403993 A1 | 24-07-2024 |
| | | | TW | 202431002 A | 01-08-2024 |
| | | | US | 2024248373 A1 | 25-07-2024 |
| EP 4235295 | A1 | 30-08-2023 | CN | 116699832 A | 05-09-2023 |
| | | | CN | 217133471 U | 05-08-2022 |
| | | | EP | 4235295 A1 | 30-08-2023 |
| | | | TW | 202334726 A | 01-09-2023 |
| | | | US | 2023273504 A1 | 31-08-2023 |
| | | | US | 2024160085 A1 | 16-05-2024 |
| | | | US | 2024160086 A1 | 16-05-2024 |

EPO FORM P0459

For more details about this annex : see Official Journal of the European Patent Office, No. 12/82